# EUROPÄISCHE PATENTSCHRIFT

(11) **EP 3 208 405 B1**
(45) Veröffentlichungstag und Bekanntmachung des Hinweises auf die Patenterteilung: **20.05.2020**
(21) Anmeldenummer: 16156324.2
(22) Anmeldetag: 18.02.2016
(51) Int. Cl.: E04H 12/34

(54) **VORRICHTUNG UND VERFAHREN ZUR ERRICHTUNG VON TURMARTIGEN BAUWERKEN AUS FERTIGTEILELEMENTEN**
DEVICE AND METHOD FOR ASSEMBLING TOWER-LIKE STRUCTURES FROM PRE-FABRICATED ELEMENTS
DISPOSITIF ET PROCÉDÉ DE MONTAGE DE CONSTRUCTIONS EN FORME DE TOURS À PARTIR D'ÉLÉMENTS PRÉFABRIQUÉS

(43) Veröffentlichungstag der Anmeldung: 23.08.2017
(73) Patentinhaber: Technische Hochschule Mittelhessen, 35390 Giessen (DE)
(72) Erfinder: BLATT, Markus, 35102 Lohra (DE)
(74) Vertreter: Stumpf, Peter

(56) Entgegenhaltungen:
- EP-A1- 1 857 670
- EP-A2- 2 746 571
- WO-A1-2009/137445
- CA-A1- 2 491 949

## Beschreibung

### Gebiet der Erfindung

Die Erfindung betrifft eine Vorrichtung und ein Verfahren zur Errichtung turmartiger Bauwerke aus Fertigteilelementen, die insbesondere als Tragwerke für Windenergieanlagen einsetzbar sind.

### Stand der Technik

Turmartige Bauwerke (nachfolgend Türme), wie sie z. B. als Tragwerke für Windenergieanlagen (WEA) in großer Stückzahl erforderlich sind, werden derzeit meist aus werkseitig vorgefertigten Stahlbeton-Fertigteilelementen hergestellt. Diese Elemente werden zu aufeinander gesetzten Levels zusammengefügt, die in ihrer Gesamtheit einen Betonturm bilden. Um bei vertretbaren Kosten eine besonders große Turmhöhe zu erreichen, kann auf einen Betonturm ein Stahlrohrturm aufgesetzt werden, wodurch ein sogenannter Hybridturm entsteht. Der Aufbau der Levels des Betonturms und das optionale Aufsetzen eines Stahlrohrturms erfolgen mithilfe eines externen Krans.

Die Errichtung eines Turms mithilfe eines externen Krans wird jedoch mit wachsender Turmhöhe, insb. für Turmhöhen > 100 m, zunehmend unwirtschaftlich, denn die Reichhöhe des externen Krans muss zumindest die Turmhöhe, im Falle von WEA sogar mindestens die Nabenhöhe der aufzusetzenden Gondel, erreichen.

Material-, Zeit- und Arbeitsaufwand zum Aufbau des externen Krans und zu seinem Abbau nach Fertigstellung des Turms und somit die Kosten des externen Krans wachsen proportional zur vorgesehenen Turmhöhe, in der Praxis sogar überproportional dazu, an. Bei WEA wird, aufgrund der mit zunehmender Höhe anwachsenden und gleichmäßiger werdenden Windgeschwindigkeit und des daher höheren Ertrags, eine weitere Steigerung der Turmhöhen angestrebt, was die Kosten für einen externen Kran weiter ansteigen lässt.
Zur Errichtung der Stahlkonstruktion eines externen Krans müssen große Materialmengen zum Standort des Turms transportiert werden, was ca. 25 Schwerlasttransporte erfordert und mit dem Anlegen von Behelfsstraßen in geschützten Gebieten verbunden sein kann.

Werden Raupenkräne eingesetzt, wie z. B. in der WO2009/056898A1 beschrieben, so sind für deren Einsatz großflächige Rodungsmaßnahmen in der Umgebung des Turms erforderlich, was die ökologische Bilanz solcher WEA erheblich verschlechtert.

Als Tragwerk für WEA werden in der Praxis bisher Hybridtürme, aufweisend einen Betonturm mit aufgesetztem Stahlrohrturm bevorzugt. Den enormen Aufwand bei der Errichtung leistungsstarker WEA auf hohen Türmen verdeutlichen die folgenden Produktbeispiele: Die 7,6-Megawatt-WEA E-126 der Firma Enercon weist einen 131 m hohen Hybridturm auf, dessen unterstes Level am Boden einen Durchmesser von 16,5 m hat. Für die 2,3-Megawatt-WEA E-92 werden Hybridtürme unterschiedlicher Höhe angeboten, sodass die Nabenhöhe dieser Anlagen zwischen 78 m und 138 m liegen kann (Enercon-Produktübersicht, Juni 2015). Level mit einem Durchmesser > 4 m können nicht mehr einteilig über die Straße transportiert werden. Es werden daher Stahlbeton-Fertigteilelemente in Form von Drittelschalen oder Halbschalen hergestellt, die noch über die Straße zur Baustelle des Turms transportierbar sind und erst beim Aufbau des Turms zu vollständigen Levels zusammengesetzt werden. Die Türme für die WEA E-92 können aufweisen bis zu: 2 Level aus Drittelschalen, 17 Level aus Halbschalen, 3 einteilige Level (jeweils aus Stahlbeton) und 3 einteilige Level aus Stahl (aufgesetzter Stahlrohrturm). Die Montage der Levels erfolgt mithilfe eines externen, bis zur Nabenhöhe der WEA reichenden, Krans, dessen Auf- und Abbau extrem aufwendig und teuer ist.

Eine Möglichkeit zum Verzicht auf einen externen Kran wird in der EP2851328A1 aufgezeigt, die die Errichtung eines Turms aus vertikal übereinander angeordneten Levels mithilfe eines internen selbstkletternden Krans (nachfolgend Kran) beschreibt. Der Kran ist im Bereich der Turmachse positioniert und bewegt sich beim Aufbau des Turms vertikal mit nach oben, sodass er sich stets im Bereich des jeweils obersten Levels befindet. Die übereinander angeordneten Levels des Turms weisen einen kreisförmigen Querschnitt auf und werden jeweils aus sechs Stahlbeton-Fertigteilelementen mit dem Querschnitt eines Sechstelkreises zusammengefügt. Dazu wird zunächst der mit einer Teleskopstütze ausgestattete Kran in der Mitte des vorbereiteten Turmfundaments positioniert. Danach werden (ohne Verwendung des Krans) die Stahlbeton-Fertigteilelemente des untersten Levels errichtet und miteinander verbunden, sodass der Kran vollständig umschlossen ist. Zum Aufbau des darüberliegenden Levels wird der Kran durch Ausfahren seiner Teleskopstütze bis zur Oberkante des untersten Levels angehoben und mit waagerechten Teleskopstäben fixiert. Die Teleskopstütze wird dann nach oben eingezogen, bis sich ihre Unterseite oberhalb der Oberkante des untersten Levels befindet. Auf dieser Höhe wird dann eine Plattform positioniert, auf die die Teleskopstütze abgesetzt wird. Diese Plattform trägt somit den Kran und die damit anzuhebenden Lasten. Sie muss daher hinreichend stabil und damit schwer ausgeführt sein. Der Kran zieht dann die Stahlbeton-Fertigteilelemente des nächsthöheren Levels an der Außenseite des untersten Levels hoch und positioniert sie so, dass sie zum fertigen nächsthöheren Level zusammengefügt werden können. Zum Aufbau weiterer Level wird dieses Vorgehen wiederholt. Die EP2851328A1 beschreibt aber nicht, wie die Plattform zum Absetzen der Teleskopstütze zugeführt und stabil fixiert wird. Der Fachmann erhält somit nur unzureichende Informationen zum Anheben des internen Krans.

Der Kran der EP2851328A1 ist somit zur Errichtung beliebig hoher Türme geeignet. Nachteilig ist jedoch, dass zentral an der Turmspitze zu positionierende Komponenten, z. B. die Gondel einer WEA nicht mithilfe dieses Krans positionierbar sind, da er sich genau am Ort der zu positionierenden Gondel befindet. Daher wird ein Hilfskran benötigt, der mithilfe des Krans an der Außenwand des Turms bis zur Turmspitze hochgezogen wird. Dieser Hilfskran baut zunächst den Kran ab, hebt dann die Gondel (mit Generator und sonstiger Innenausstattung, jedoch noch ohne Rotorblätter) zur Turmspitze an und positioniert sie dort. Anschließend transportiert der Hilfskran auch die Rotorblätter an den Ort ihrer Montage. Danach wird er mithilfe einer an der Gondel befindlichen Seilwinde wieder abgelassen.

Dieses Verfahren mit zwei Kränen geringer Höhe (Kran und Hilfskran mit einer Höhe, die im Bereich der doppelten Levelhöhe liegt) ist zwar im Vergleich zur Verwendung eines die Turmhöhe überragenden Krans wesentlich wirtschaftlicher, es bleibt jedoch, da zwei Kräne eingesetzt werden müssen, immer noch sehr umständlich und kostenträchtig. Zudem ist die in der EP2851328A1 beschriebene Befestigung an der Turmwandung nicht ausreichend tragfähig, um das Gondelgewicht einer WEA anzuheben.

Die EP2746571A2 beschreibt eine Vorrichtung zur Errichtung von WEA mit einer Hebestruktur und einem verschiebbaren Aufstiegselement. Diese Vorrichtung weist Führungsmechanismen auf, die eine nachteilig geringe Tragfähigkeit haben.

### Aufgabe der Erfindung

Aufgabe der Erfindung ist es, eine Vorrichtung und ein Verfahren zur Errichtung von beliebig hohen, aus übereinander angeordneten Levels bestehenden, Türmen, deren Höhe nicht durch die maximale Höhe eines externen Krans begrenzt ist, anzugeben. Die Türme sollen ausführbar sein sowohl als offene Betontürme, bei denen innerhalb eines Levels Stahlbeton-Fertigteilelemente über Fachwerk-Fertigteilelemente miteinander verbunden sind, als auch als geschlossene Betontürme, bei denen innerhalb eines Levels Stahlbeton-Fertigteilelemente direkt miteinander verbunden sind, wobei die Betontürme durch aufgesetzte Stahlrohrtürme zu Hybridtürmen erweiterbar sein sollen.

Ferner ist es Aufgabe der Erfindung, die Vorrichtung und das Verfahren so auszugestalten, dass sie es erlauben, eine Baugruppe mit vorgegebenen Abmessungen, die über den Turmdurchmesser hinausreichen können, und vorgegebener Masse bis zur Turmspitze anzuheben, auf der Turmspitze zu positionieren und dort dauerhaft und sicher zu fixieren. Dazu ist eine Vorrichtung anzugeben, die eine besonders große Tragfähigkeit aufweist.

Vorrichtung und Verfahren sollen für die Errichtung von WEA, umfassend einen Turm als Tragwerk und eine auf der Turmspitze positionierte, vollständig ausgerüstete und mit Rotorblättern ausgestattete Gondel, optimiert sein. Vorrichtung und Verfahren sollen aber auch zur Errichtung anderer turmartiger Bauwerke, wie z. B. Wassertürmen, die einen Wasserbehälter tragen, oder Aussichtsplattformen, einsetzbar sein. Die geschilderten Nachteile des Standes der Technik, insbesondere die Nachteile der aus der EP2851328A1 bekannten Vorrichtung mit zwei Kränen und des zugehörigen Verfahrens, sind zu überwinden. Nach Abschluss der Arbeiten zur Errichtung eines Turms soll die Vorrichtung in einfacher Weise vollständig abzubauen sein, sodass sie beliebig oft bei der Errichtung weiterer Türme wiederverwendbar ist.

### Lösung der Aufgabe

Die Aufgabe der Erfindung wird gelöst durch eine Vorrichtung gemäß dem Anspruch 1 und den zugehörigen Unteransprüchen, umfassend eine Konstruktion mit mindestens einem aufgesetzten Kran, wobei zumindest eine dieser Komponenten, d. h. die Konstruktion und/oder der Kran, mit einer Hebevorrichtung ausgestattet ist. Ferner wird die Aufgabe der Erfindung gelöst durch ein Verfahren gemäß Anspruch 6, welches den bestimmungsgemäßen Einsatz der Vorrichtung beschreibt.

### Detaillierte Darstellung der erfindungsgemäßen Lösung

### Art der zu errichtenden Türme

Die unten beschriebene erfindungsgemäße Lösung ist zur Errichtung von Türmen, die aus übereinander angeordneten Levels bestehen, einsetzbar. Besonders vorteilhaft einsetzbar ist sie für die Errichtung von Türmen aus werkseitig vorgefertigten Elementen, die am Standort des Turms zu solchen Levels zusammengesetzt werden.

Es können sowohl a) Betontürme als auch b) Hybridtürme errichtet werden.

### a) Betontürme

Betontürme sind ausführbar als offene und geschlossene Betontürme. Die zu tragende Baugruppe, beispielsweise die Gondel einer WEA, wird unmittelbar auf der Turmspitze des Betonturms platziert.

### a1) Offener Betonturm (nicht beanspruchtes Ausführungsbeispiel)

Ein offener Betonturm besteht aus übereinander angeordneten Levels, in denen Stahlbeton-Fertigteilelemente und Fachwerk-Fertigteilelemente wechselweise angeordnet sind. Jedes Fachwerk-Fertigteilelement verbindet somit zwei Stahlbeton-Fertigteilelemente miteinander. Ebenso verbindet jedes Stahlbeton-Fertigteilelement zwei Fachwerk-Fertigteilelemente miteinander. Bevorzugt ist eine Ausführung mit drei Stahlbeton-Fertigteilelementen und drei Fachwerk-Fertigteilelementen je Level. Die Stahlbeton-Fertigteilelemente weisen bevorzugt einen kreisbogenförmigen Querschnitt auf, jedoch sind auch eckige, parabelförmige oder andere dem Fachmann bekannte Querschnitte möglich. Die Fachwerk-Fertigteilelemente sind bevorzugt eben ausgeführt. Die Fachwerkstäbe der Fachwerk-Fertigteilelemente sind ausführbar als Stahlstäbe, als Betonstäbe, vorzugsweise aus ultrahochfestem Beton (UHPC = Ultra High Performance Concrete), oder als Verbundstäbe aus Beton mit einer Stahlummantelung.

### a2) Geschlossener Betonturm

Ein geschlossener Betonturm besteht aus übereinander angeordneten Levels, die mehrere Stahlbeton-Fertigteilelemente aufweisen. Im Sonderfall eines Turmes mit hinreichend kleinem unterem Durchmesser (≤ 4 m) kann ein Level auch aus einem einzigen ringförmigen Stahlbeton-Fertigteilelement gebildet werden. Im Regelfall, d. h. bei Türmen mit größerem unterem Durchmesser (> 4 m), weist das Level jedoch bevorzugt zwei oder drei Stahlbeton-Fertigteilelemente auf, die erst am Turmstandort direkt miteinander verbunden werden. Im Falle von zwei Stahlbeton-Fertigteilelementen sind diese als Halbschalen ausgeführt, im Falle von drei Stahlbeton-Fertigteilelementen sind diese als Drittelschalen ausgeführt. Eine größere Anzahl von Stahlbeton-Fertigteilelementen je Level ist möglich, jedoch in der Praxis bisher nicht erforderlich. Die Stahlbeton-Fertigteilelemente weisen bevorzugt einen kreisbogenförmigen Querschnitt auf, jedoch sind auch hier eckige, parabelförmige oder andere dem Fachmann bekannte Querschnitte möglich.

### b) Hybridtürme

Hybridtürme bezeichnen, wie einleitend erklärt, Betontürme, die durch einen auf ihrer Oberseite aufgesetzten Abschnitt aus Stahlrohren (nachfolgend: aufgesetzter Stahlrohrturm) nach oben erweitert sind. Der aufgesetzte Stahlrohrturm weist mindestens ein Level, gebildet durch ein Stahlrohr, auf. Im Falle mehrerer Levels sind deren Stahlrohre, die gleiche Durchmesser aufweisen, übereinander angeordnet. Vorzugsweise sind die Stahlrohre der Level gleich lang, sodass alle Levels des aufgesetzten Stahlrohrturms die gleiche Höhe aufweisen. Es sind aber auch unterschiedlich lange Stahlrohre und somit Levels unterschiedlicher Höhe möglich. Die zu tragende Baugruppe, beispielsweise die Gondel einer Windenergieanlage, wird bei Hybridtürmen an der Spitze des aufgesetzten Stahlrohrturms platziert.

Die oben beschriebenen offenen und geschlossenen Betontürme lassen sich jeweils zu Hybridtürmen erweitern. Es sind somit folgende Arten von Hybridtürmen zu unterscheiden:
b1) Offener Hybridturm, aufweisend einen offenen Betonturm mit aufgesetztem Stahlrohrturm,
b2) Geschlossener Hybridturm, aufweisend einen geschlossenen Betonturm mit aufgesetztem Stahlrohrturm.

Alle Ausführungsformen weisen die zum Erreichen der gewünschten Turmhöhe erforderliche Anzahl von Levels auf.

### Erfindungsgemäße Konstruktion

Die erfindungsgemäße Konstruktion kann in sehr verschiedenen Ausführungsformen hergestellt werden, die für die Art des jeweils zu errichtenden Turms optimiert sind. Alle Ausführungsformen sind durch folgende gemeinsame Merkmale verbunden:
Die Konstruktion weist eine lichte Höhe und eine lichte Weite auf, die hinreichend groß sind, um nacheinander die zu errichtenden Levels des Turms und, nach Fertigstellung des Turms, die an der Spitze des obersten Levels zu befestigende Baugruppe, z. B. die Gondel einer WEA, in dem von der Konstruktion aufgespannten freien Raum zu positionieren. Die Konstruktion ist an der Oberseite des jeweiligen obersten Levels sicher befestigbar und wieder lösbar.
Die Konstruktion weist eine ausreichende Stabilität und Tragfähigkeit auf, um einen auf ihrer Oberseite befestigten Kran einschließlich seiner maximalen angehängten Last zu tragen. Bei dieser Last kann es sich z. B. um die vollständig ausgerüstete Gondel einer WEA handeln, die ggf. bereits mit Rotorblättern ausgestattet ist. Die Komponenten der WEA können natürlich auch einzeln angehoben werden.
Der Kran ist an der Oberseite der Konstruktion sicher befestigbar und wieder lösbar.

Während der Errichtung des Turms ist es erforderlich, dass die Konstruktion und der Kran mit dem wachsenden Turm in die Höhe bewegt werden, also nach Fertigstellung eines Levels jeweils um die Höhe dieses Levels angehoben werden. Ist eine Baugruppe auf dem Turm zu positionieren, so muss die Konstruktion mit dem Kran nach Fertigstellung des Turms um mindestens die Höhe dieser Baugruppe angehoben werden. Dazu ist zumindest eine der beiden Komponenten, die Konstruktion oder der Kran, mit einer Hebevorrichtung ausgestattet. Es ist möglich, beide Komponenten mit einer Hebevorrichtung auszustatten, jedoch wäre das mit höheren Kosten verbunden und somit unwirtschaftlich. Die Hebevorrichtung weist mindestens drei um mindestens die Levelhöhe ausfahrbare Stützen auf, wodurch die Hebevorrichtung einen mindestens der Levelhöhe entsprechenden Höhenunterschied überwinden kann. Die Stützen sind bevorzugt als hydraulische Pressen ausgeführt. Werden Level unterschiedlicher Höhe errichtet, so müssen die Stützen mindestens um die Höhe des höchsten zu errichtenden Levels ausfahrbar sein. Ist, in Ausnahmefällen, eine auf dem Turm zu positionierende Baugruppe höher als das höchste Level, so müssen die Stützen mindestens um die Höhe dieser Baugruppe ausfahrbar sein. Die Tragfähigkeit der Hebevorrichtung ist so ausgelegt, dass sie es erlaubt, die Konstruktion, den Kran und ggf. einen optionalen zweiten Kran gemeinsam anzuheben.

### Ausführungsformen der Konstruktion

### a) Konstruktion für einen offenen Betonturm (nicht beanspruchtes Ausführungsbeispiel)

Ein Level eines offenen Betonturms wird errichtet, indem zunächst seine Stahlbeton-Fertigteilelemente positioniert werden, die anschließend durch Fachwerk-Fertigteilelemente verbunden werden. Daher kann sich die erfindungsgemäße Konstruktion bis zum Abschluss der Positionierung der Stahlbeton-Fertigteilelemente innerhalb des zu errichtenden Turmsegments befinden, wobei Teile der Konstruktion durch die Zwischenräume, in denen im Anschluss die Fachwerk-Fertigteilelemente platziert werden, in den Raum außerhalb des Turms hineinreichen. Sie kann also auf dem bereits fertiggestellten Turmstumpf aufliegen und während der Errichtung der Stahlbeton-Fertigteilelemente des neuen Levels dort verbleiben. (Ein Turmstumpf bezeichnet in dieser Anmeldung einen unfertigen Turm, auf den noch mindestens ein Level aufzusetzen ist.) Daraus resultiert folgende bevorzugte Ausführungsform dieser Konstruktion: Sie wird gebildet durch aufrechtstehende rechtwinklige Rahmen. Ausgehend von der Turmachse erstrecken sich sternförmig in Richtung der Zwischenräume obere und untere Rahmenabschnitte, die durch einen verbindenden Rahmenabschnitt außerhalb des Turms miteinander verbunden sind. Innerhalb des Turms (entlang der Turmachse oder parallel dazu) ist jedoch, damit die lichte Weite der Konstruktion nicht verringert wird, kein verbindender Rahmenabschnitt vorhanden. Die Rahmenabschnitte der Konstruktion können in Form von einzelnen Trägern ausgebildet sein. Bevorzugt werden diese Rahmenabschnitte jedoch als Fachwerk, bestehend aus mehreren über Querstreben verbundenen Trägern, ausgeführt, wodurch eine besonders hohe Tragfähigkeit der Konstruktion gewährleistet wird. Die oberen Rahmenabschnitte verlaufen bevorzugt waagerecht, da das die kostengünstigste Lösung ist. Sie können aber auch schräg verlaufen, sodass sie sich im Bereich der Turmachse an einem (gegenüber ihren äußeren Endpunkten) höher oder auch niedriger liegenden Punkt treffen. Auch ein bogenförmiger oder geknickter Verlauf ist realisierbar. Weitere Formen sind möglich. Die unteren Rahmenabschnitte, mit denen die Stahlkonstruktion auf dem Turmstumpf aufliegt, verlaufen bevorzugt waagerecht. In Ausnahmefällen kann auch für die unteren Rahmenabschnitte ein schräger Verlauf gewählt werden, sofern eine stabile Auflage auf dem Turmstumpf gewährleistet bleibt.

Weisen die Level vier (oder eine größere gerade Zahl) regelmäßig auf dem Turmquerschnitt verteilte Stahlbeton-Fertigteilelemente auf, so ist die Konstruktion besonders einfach ausführbar in Form von zwei rechteckförmigen Rahmen mit jeweils einem unteren und einem oberen, den Turm geradlinig durchlaufenden Rahmenabschnitt, die außerhalb des Turms auf gegenüberliegenden Turmseiten jeweils durch zwei senkrechte Rahmenabschnitte verbunden sind. Im Bereich der Turmachse kreuzen sich die beiden rechteckförmigen Rahmen, wobei der obere und der untere Kreuzungspunkt, wie oben erläutert, nicht durch einen senkrechten Rahmenabschnitt verbunden sind.

Bei offenen Betontürmen, deren Levels eine ungerade Anzahl von (regelmäßig auf dem Turmquerschnitt verteilten) Stahlbeton-Fertigteilelementen aufweisen, sind durchgehende, d. h. den Turm geradlinig durchlaufende, untere und obere Rahmenabschnitte nicht möglich. Weist das Level z. B. drei Stahlbeton-Fertigteilelemente auf, so wird die Konstruktion durch drei sternförmig von der Turmachse ausgehende, zwecks gleichmäßiger Lastenverteilung vorzugsweise um 120° versetzte, Rahmen aus einem unteren und einem oberen Rahmenabschnitt, die durch einen außerhalb des Turms befindlichen verbindenden Rahmenabschnitt verbunden sind, gebildet. Diese drei Rahmen sind im Bereich der Turmachse miteinander verbunden, jedoch auch hier ohne einen verbindenden Rahmenabschnitt im Bereich der Turmachse. Die verbindenden Rahmenabschnitte verlaufen vorzugsweise senkrecht, können aber auch schräg, geknickt oder bogenförmig ausgeführt sein. Weitere Formen sind möglich. Der Abstand zwischen den oberen und den unteren Rahmenabschnitten wird durch die Höhe der verbindenden Rahmenabschnitte vorgegeben. Bei nicht senkrechtem Verlauf der verbindenden Rahmenabschnitte ist mit Höhe die Projektion auf die Senkrechte gemeint.

Diese Ausführung als dreistrahlige Konstruktion und die vorab beschriebene Ausführung mit zwei gekreuzten (um 90° versetzten) rechteckigen Rahmen sind bevorzugt, da sie bei einfachem Aufbau eine ausreichende Stabilität bieten: Sie sind stabil auf einem bereits fertiggestellten Turmstumpf (bestehend aus einem mehreren übereinander angeordneten Levels) positionierbar und dort sicher, aber lösbar, fixierbar.

Auch für offene Betontürme mit fünf und mehr (annähernd regelmäßig angeordneten) Stahlbeton-Fertigteilelementen je Level ist, wie nachfolgend beispielhaft erläutert, stets mindestens eine dieser beiden Ausführungen verwendbar.

Bei fünf Stahlbeton-Fertigteilelementen je Segment ist die dreistrahlige Konstruktion verwendbar, wobei die Winkel zwischen den drei Rahmen der 5-zähligen Turmgeometrie angepasst und wie folgt gewählt werden: 144°, 144°, 72°.

Abhängig von dem von der Turmachse aus gesehenen Öffnungswinkel der Zwischenräume sind Abweichungen von den genannten Winkeln zulässig, solange sichergestellt ist, dass die unteren Rahmenabschnitte noch durch die Zwischenräume hindurchgeführt werden können.

Eine so ausgeführte Konstruktion kann in drei (für die anschließende Installation von Fachwerk-Fertigteilelementen vorgesehenen) Zwischenräumen positioniert werden, wobei zwei nicht benachbarte Zwischenräume frei bleiben. Entsprechende Lösungen unter Verwendung einer dreistrahligen Konstruktion sind, für den Fachmann leicht ersichtlich, auch für eine größere ungerade Anzahl von Stahlbeton-Fertigteilelementen je Level möglich.

Bei sechs Stahlbeton-Fertigteilelementen je Level sind mehrere gleichwertige Lösungen verfügbar: Möglich ist die oben beschriebene Ausführung mit zwei gekreuzten rechteckigen Rahmen, wobei diese aber, angepasst an die Turmgeometrie, statt um 90° hier um 60° versetzt sind. Dadurch bleiben zwei (für die anschließende Installation von Fachwerk-Fertigteilelementen vorgesehene) gegenüberliegende Zwischenräume frei. Alternativ kann auch die dreistrahlige Konstruktion mit um 120° versetzten Rahmen verwendet werden, wobei jeder zweite der sechs Zwischenräume freibleibt. Für den Fachmann leicht ersichtlich, sind auch hier entsprechende Lösungen für eine größere gerade Anzahl von Stahlbeton-Fertigteilelementen je Level möglich. Beispielsweise kann für einen Turm mit acht Stahlbeton-Fertigteilelementen je Level die gleiche Konstruktion wie für einen für einen Turm mit vier Stahlbeton-Fertigteilelementen je Level verwendet werden, d. h. zwei gekreuzte (um 90° versetzte) rechteckige Rahmen.

Offene Betontürme mit mehr als acht Stahlbeton-Fertigteilelementen je Level werden jedoch aus heutiger Sicht keine Praxisrelevanz erlangen, da sie eine sehr hohe Anzahl von miteinander zu verbindenden Komponenten aufweisen, was keinen erkennbaren technischen Vorteil bietet, jedoch mit hohen Kosten verbunden ist.

Die vorangehenden Beispiele zeigen, dass die Form der Rahmen weitgehend beliebig sein kann, solange die Konstruktion die oben aufgelisteten Merkmale aufweist. Aus Stabilitätsgründen muss die Konstruktion an mindestens drei Punkten am Turm, d. h. am jeweils obersten Level, fixierbar sein. Die Konstruktion kann durch weitere Träger stabilisiert werden.

Bei den beschriebenen Konstruktionen ist zumindest auf der Oberseite der Konstruktion ein Kran aufgesetzt und sicher fixiert. Er kann am oberen Kreuzungs- bzw. Berührungspunkt der Rahmen, also auf der Turmachse (zentrisch), oder an einer anderen beliebigen Stelle außermittig (exzentrisch) positioniert sein. Es ist auch möglich, den Kran an der Seite der Konstruktion zu fixieren, sodass sein Ausleger von außen im Bereich über der Konstruktion bewegt werden kann. Die Tragfähigkeit des Krans ist so ausgelegt, dass er das Anheben schwerer Lasten, insbesondere einzelner Stahlbeton-Fertigteilelemente eines Levels und der Gondel einer WEA zulässt. Bei der Errichtung von WEA ist es vorteilhaft, den Kran außermittig oder an der Seite der Konstruktion zu positionieren, damit der Einbau des Generators und des Adapterrings, der Turm und Gondel verbindet, problemlos möglich ist.

Am unteren Kreuzungs- bzw. Berührungspunkt oder einer anderen beliebigen Stelle der Rahmen kann ein optionaler zweiter Kran aufgesetzt und sicher fixiert sein.

Bei den vorab beschriebenen Konstruktionen für offene Betontürme ist die Konstruktion selbst mit einer Hebevorrichtung ausgestattet, sodass der auf der Oberseite der Konstruktion positionierte Kran und der optionale, auf der Unterseite der Konstruktion positionierte Kran zusammen mit der Konstruktion angehoben werden. Dadurch wird die Kletterfähigkeit der Vorrichtung aus Konstruktion und (mindestens einem) Kran gewährleistet.

Um während des Anhebens der Konstruktion auch ausreichende Stabilität zu haben, weist die Hebevorrichtung vorzugsweise vier oder mehr ausfahrbare Stützen, bevorzugt gebildet durch hydraulische Pressen, auf, damit stets mindestens drei Stützen mit dem Turm verbunden bleiben, während eine Stütze vom Turm gelöst und nach oben verfahren wird. Es ist möglich, die Anzahl der ausfahrbaren Stützen auf drei zu verringern. Vor dem Verfahren einer Stütze muss in diesem Fall eine Zwischenabstützung vorgenommen werden, die die Konstruktion zusammen mit den beiden Stützen, die mit dem Turm verbunden bleiben, trägt.

Die Stützen der Hebevorrichtung sind bevorzugt an der Unterseite der unteren Rahmenabschnitte befestigt. Sie sind so positioniert, dass sie auf Querstreben, die zwischen den Stahlbeton-Fertigteilelementen des darunterliegenden Levels liegen, absetzbar sind.

Die in diesem Abschnitt beschriebenen Konstruktionen mit zumindest einem aufgesetzten Kran eignen sich optimal zur Errichtung eines offenen Betonturms frei wählbarer Höhe. Das Verfahren zur Errichtung eines solchen Turms wird in einem unten folgenden Abschnitt beschrieben. Die in diesem Abschnitt beschriebenen Konstruktionen mit zumindest einem aufgesetzten Kran eignen sich jedoch nicht zur Errichtung eines offenen Hybridturms, d. h. eines Betonturms mit aufgesetztem Stahlrohrturm. Zur Errichtung eines solchen Turms muss die im nachfolgenden Abschnitt b) beschriebene Konstruktion eingesetzt werden.

### b) Konstruktion für einen geschlossenen Betonturm

Ein Level eines geschlossenen Betonturms weist Stahlbeton-Fertigteilelemente auf, die unmittelbar miteinander verbunden sind. Bei der Errichtung eines solchen Levels verbleiben also keine Zwischenräume zwischen den Stahlbeton-Fertigteilelementen, in denen die unter a) beschriebenen Konstruktionen auf dem darunterliegenden, bereits fertiggestellten Turmstumpf aufgesetzt werden könnten. An der Unterseite der Konstruktion sind daher keine in den Turm hineinreichenden oder den Turm durchlaufenden Rahmenabschnitte verwendbar. Die Konstruktion muss somit an die Erfordernisse eines geschlossenen Betonturms angepasst werden, zugleich aber weiterhin sämtliche eingangs genannten Merkmale aufweisen.

### Eine entsprechend angepasste Konstruktion ist wie folgt ausgeführt:

An ihrer Oberseite weist sie den gleichen Aufbau auf wie die unter a) beschriebenen Konstruktionen. Bevorzugt sind die Ausführung mit zwei sich kreuzenden oberen Rahmenabschnitten sowie die Ausführung mit drei sternförmig von der verlängerten Turmachse ausgehenden oberen Rahmenabschnitten, die vorzugsweise um 120° versetzt sind, wodurch eine gleichmäßige Lastenverteilung gewährleistet wird. Die letztgenannte dreistrahlige Ausführung zeichnet sich durch den geringsten Materialeinsatz und den einfachsten Aufbau aus und ist daher besonders bevorzugt.

Die Länge der oberen Rahmenabschnitte an der Oberseite des Turms wird so gewählt, dass sie über den Durchmesser des im Aufbau befindlichen Turms hinausreichen. An ihren äußeren Enden sind sie jeweils mit einem verbindenden Rahmenabschnitt verbunden, dessen Länge die Höhe des zu errichtenden Levels übersteigt. An ihren unteren Enden sind diese verbindenden Rahmenabschnitte jeweils mit einem unteren Rahmenabschnitt verbunden, der bis zur Außenseite des Turms reicht und vorzugsweise ein Befestigungselement aufweist, um den Rahmenabschnitt an der Außenseite des Turms nahe dem oberen Ende des bereits fertiggestellten Turmstumpfs zu befestigen. Vorzugsweise weist der Turmstumpf korrespondierende Befestigungselemente auf, mit denen die Befestigungselemente der unteren Rahmenabschnitte verbindbar sind. Beispiele für solche Befestigungselemente und die mit ihnen korrespondierenden Befestigungselemente sind dem Fachmann bekannt.

Die Konstruktion aus den oberen und unteren Rahmenabschnitten, die durch verbindende Rahmenabschnitte verbunden sind, ist nach unten offen und kann klammerartig mit einem Turmstumpf verbunden werden. Die unteren Rahmenabschnitte verlaufen vorzugsweise waagerecht. Sie können aber auch schräg ausgeführt werden, wobei sie von außen leicht nach unten geneigt zum Turmstumpf geführt werden sollten, da in diesem Fall durch das Gewicht der Konstruktion eine zusätzliche Druckkraft erzielt wird, die die Klammerwirkung verstärkt, d. h. die unteren Rahmenabschnitte werden stärker gegen den Turm gedrückt. Die oberen und unteren Rahmenabschnitte sind mit den verbindenden Rahmenabschnitten über biegesteife Rahmenecken verbunden, wodurch ein mechanisch stabiler Rahmen gebildet wird.

Die oberen Rahmenabschnitte verlaufen vorzugsweise waagerecht, die verbindenden Rahmenabschnitte verlaufen vorzugsweise senkrecht. Sie können aber auch die im vorangehenden Abschnitt genannten Formen (schräg, geknickt, bogenförmig) oder weitere dem Fachmann bekannte Formen haben. Dadurch wird es möglich, die Gestalt der Konstruktion optimal an die Abmessungen der in ihrem Inneren zu positionierenden Lasten, z. B. an die Form der Gondel einer WEA, anzupassen.

In der Regel weisen Betontürme einen sich nach oben verringernden Durchmesser (Verjüngung) auf. Da die Konstruktion zusammen mit dem wachsenden Turm anzuheben ist, muss sie eine Anpassung an den sich nach oben verringernden Durchmesser der Levels zulassen. Das wird erreicht, indem zumindest die unteren Rahmenabschnitte als Kragarme ausgeführt sind, deren Länge durch Ausziehen eines mit einem Befestigungselement versehenen Bereichs veränderbar ist. Die Länge des ausziehbaren Bereichs ist so gewählt, dass das Befestigungselement auch bei dem geringsten Durchmesser des Turms, d. h. an der Oberseite des obersten Levels nach Erreichen der vorgegebenen Endhöhe des Turms, mit einem korrespondierenden Befestigungselement verbindbar ist. Ist die zu überbrückende Differenz des Turmdurchmessers unten und oben sehr groß, so ist es möglich, auch die oberen Rahmenabschnitte als Kragarme auszuführen. Dadurch ist die lichte Weite der Konstruktion den jeweiligen Erfordernissen anpassbar, was z. B. während des Positionierens der Gondel einer WEA auf der Turmspitze notwendig sein kann. Das Ausziehen und Einziehen eines Kragarms erfolgt vorzugsweise hydraulisch.

Auf der Oberseite der Konstruktion ist im Bereich der verlängerten Turmachse, wo sich die oberen Rahmenabschnitte kreuzen bzw. treffen, ein Kran zentrisch oder exzentrisch positioniert und sicher fixiert, genau wie oben unter a) beschrieben.

Bei der unter a) beschriebenen Anordnung für offene Betontürme ist die Konstruktion mit einer Hebevorrichtung ausgestattet ist, die an ihren unteren Rahmenabschnitten befestigt ist. Diese Positionierung der Hebevorrichtung ist für geschlossene Betontürme nicht möglich, da die unteren Rahmenabschnitte als außerhalb des Turms befindliche Kragarme ausgebildet sind. Deshalb werden hier wahlweise die oberen Rahmenabschnitte der Konstruktion oder der auf der Oberseite der Konstruktion fixierte Kran mit einer Hebevorrichtung ausgestattet. Die Hebevorrichtung weist Stützen auf, die auf dem Rand eines zuletzt fertiggestellten Levels absetzbar sind.

Die in Abschnitt b) beschriebenen Konstruktionen mit einem aufgesetzten Kran eignen sich nicht nur zur Errichtung geschlossener Betontürme, sondern auch zur Errichtung offener und geschlossener Hybridtürme. Das Verfahren zur Errichtung solcher Türme wird in einem unten folgenden Abschnitt beschrieben.

Alle in den vorangehenden Abschnitten a) und b) beschriebenen Konstruktionen sind sowohl in Form einer Fachwerkkonstruktion als auch aus vorgefertigten einfachen Trägern (Walzprofile oder geschweißte Träger) herstellbar. Die Entscheidung, ob eine Fachwerckonstruktion oder einfache Träger verwendet werden, hängt im Wesentlichen von dem Gewicht der auf den Turm aufzusetzenden Baugruppe ab. Der aufgesetzte Kran kann aus einer Fachwerkkonstruktion oder auch aus ineinanderlaufenden viereckigen Hohlprofilen bestehen, wie sie bei Mobilkränen verwendet werden

Die in den vorangehenden Abschnitten a) und b) beschriebenen Konstruktionen, aufweisend Rahmen mit Rahmenabschnitten, werden vorzugsweise aus Stahl ausgeführt, da Stahl das beste Preis-Leistungs-Verhältnis aufweist. Er hat eine Vielzahl positiver Eigenschaften wie hohe Zugfestigkeit, Elastizität, mechanische Belastbarkeit, umfangreiche Sortenauswahl. Für jeden Anwendungsfall stehen geeignete Stähle zu günstigen Kosten zur Verfügung. Es sind neben Stahl aber auch andere hinreichend belastbare Materialien zur Herstellung der Konstruktionen einsetzbar. Als solche Alternativen zu Stahl sind aufgrund ihrer vorteilhaften mechanischen Eigenschaften z. B. Glasfaser- und Kohlefaser-Verbundwerkstoffe, Aluminium oder auch Stahl- bzw. Spannbeton oder Kombinationen dieser Materialien verwendbar, was aber aufgrund ihrer hohen Kosten und geringeren Festigkeiten gegenwärtig unwirtschaftlich ist.

### Erfindungsgemäßes Verfahren

Zur Umsetzung des nachfolgend beschriebenen erfindungsgemäßen Verfahrens zur Errichtung von Türmen sind folgende Voraussetzungen zu schaffen, die nicht Teil der Erfindung sind:
Ein Fundament für einen zu errichtenden Turm ist fertiggestellt. Die Stahlbeton-Fertigteilelemente zum Aufbau der Levels, alle anderen Komponenten des Turms sowie die erfindungsgemäß zu verwendende, vormontierte Konstruktion und der aufzusetzende Kran sowie ggf. ein optionaler zweiter aufzusetzender Kran wurden zur Baustelle des Turms transportiert und sind dort unmittelbar zugriffsbereit. Verfügbar ist außerdem ein externer Mobilkran, dessen Tragkraft ausreicht, um die vorangehend genannten Komponenten einzeln zu bewegen. Seine Reichhöhe muss ausreichend groß sein, um die Konstruktion und den Kran nach Fertigstellung eines Turmstumpfs, bestehend aus mindestens einem Level, auf dessen Oberseite zu positionieren.

Die untersten Levels des Turms, d. h. der Turmstumpf, sind am kostengünstigsten auf herkömmliche Weise unter Verwendung des Mobilkrans zu errichten. Die Anzahl dieser Levels ist durch die Levelhöhe und die Reichhöhe des Mobilkrans bestimmt. Sie wird so gewählt, dass die Reichhöhe des Mobilkrans noch ausreicht, um die erfindungsgemäße Konstruktion bis auf die Höhe des Turmstumpfs anzuheben und zentral auf dem Turmstumpf zu positionieren. Der Kran kann dabei bereits auf der Oberseite der Konstruktion aufgesetzt sein und zugleich mit dieser angehoben werden. Alternativ kann auch zunächst die Konstruktion ohne den Kran mithilfe des Mobilkrans angehoben werden. Der Kran wird in diesem Fall erst danach durch den Mobilkran angehoben und auf der Oberseite der Konstruktion positioniert. Der Mobilkran muss hierfür eine größere Reichhöhe besitzen (bis über die Oberseite der Konstruktion hinaus), jedoch genügt eine geringere Tragfähigkeit. Das Positionieren des Krans ist natürlich auch möglich, indem (bei gleicher Reichhöhe des Mobilkrans) die Höhe des Turmstumpfs verringert wird. Dazu genügt es in der Regel, die Anzahl seiner Levels um eins zu verringern. Um die Konstruktion sicher auf dem Turmstumpf positionieren zu können, werden im Falle eines offenen Betonturms nahe der Oberseite des obersten Levels seines Turmstumpfs Querstreben zwischen allen benachbarten Stahlbeton-Fertigteilelementen, die dieses Level bilden, eingelegt. Die Stützen der Hebevorrichtung werden auf die Querstreben aufgesetzt. Sind M Stahlbeton-Fertigteilelemente und somit eine Anzahl M von Querstreben vorhanden, so müssen die Querstreben so stabil ausgeführt und positioniert sein, dass M-1 Querstreben das Gewicht der Konstruktion, der mit ihr verbundenen Hebevorrichtung und des Krans tragen können. Dadurch wird das unten beschriebene Anheben der Konstruktion, der mit ihr verbundenen Hebevorrichtung und des Krans ermöglicht.

Es ist möglich, auf die Errichtung eines Turmstumpfs in herkömmlicher Weise zu verzichten und den gesamten Turm, beginnend mit dem untersten, unmittelbar über dem Fundament befindlichen Level mit dem erfindungsgemäßen Verfahren aufzubauen. In diesem Fall wird die Konstruktion mit dem aufgesetzten Kran direkt auf dem Fundament positioniert. Jedoch ist die Errichtung eines Turmstumpfs in der vorab beschriebenen Weise mithilfe eines Mobilkrans einfacher und damit wirtschaftlicher. Das erfindungsgemäße Verfahren erweist sich als vorteilhaft für die Level, die nicht mehr durch den Mobilkran, dessen Reichhöhe begrenzt ist, positioniert werden können.

Die Ausführungsformen der Konstruktion und des Krans hängen von der Art des zu errichtenden Turms ab: Im Falle eines offenen Betonturms ist eine Konstruktion gemäß dem obigen Punkt a) zu bevorzugen, die mit einer Hebevorrichtung ausgestattet ist, während der Kran keine eigene Hebevorrichtung aufweist. Im Falle eines geschlossenen Betonturms ist eine Konstruktion gemäß dem obigen Punkt b) zu verwenden, wobei eine Hebevorrichtung an den oberen Rahmenabschnitten der Konstruktion oder an dem aufgesetzten Kran befestigt ist.

Nachdem die Konstruktion mit dem aufgesetzten Kran auf dem in herkömmlicher Weise errichteten Turmstumpf oder auf dem Fundament positioniert und fixiert ist, wird das erfindungsgemäße Verfahren zur Errichtung eines Turms wie folgt durchgeführt:
a) zur Errichtung eines offenen Betonturms
   i) Der auf der Konstruktion fixierte Kran hebt die für ein neues Level benötigten Stahlbeton-Fertigteilelemente nacheinander an und positioniert sie nacheinander auf dem bereits fertigen Turmstumpf bzw., falls noch kein Turmstumpf errichtet wurde, auf dem Fundament zwischen den durchgehenden unteren Rahmenabschnitten der Konstruktion. Sie werden mit den darunterliegenden Stahlbeton-Fertigteilelementen des Turmstumpfs bzw. mit dem Fundament verbunden.
   ii) Die Konstruktion wird mithilfe der Hebevorrichtung soweit angehoben, dass sich ihre Unterseite oberhalb der Oberseite des neuerrichteten Levels befindet. Dazu werden die Stützen der Hebevorrichtung, vorzugsweise ausgeführt als hydraulische Pressen, gleichzeitig ausgefahren.
   iii) Eine erste Stütze wird eingefahren, also nach oben hin eingezogen, sodass sich ihre Unterseite oberhalb des neuerrichteten Levels befindet. Die übrigen Stützen halten die Konstruktion während dieses Vorgangs in einer stabilen Position. Zwischen den beiden der angehobenen Stütze benachbarten Stahlbeton-Fertigteilelementen wird nahe ihrer Oberseite eine Querstrebe eingelegt und sicher fixiert. Dazu sind die beiden Stahlbeton-Fertigteilelemente und die Querstrebe mit geeigneten Haltevorrichtungen ausgestattet. Die eingefahrene Stütze wird bis zur Querstrebe ausgefahren, auf dieser abgesetzt und dort sicher befestigt, sodass sie nun wieder ihren Beitrag zum Halten der Konstruktion leistet.
   iv) Dieser Vorgang wird mit einer zweiten und mit allen folgenden Stützen wiederholt, bis sämtliche Stützen nach oben eingefahren und auf einer Querstrebe zwischen zwei Stahlbeton-Fertigteilelementen abgesetzt sind.
   v) Mithilfe des aufgesetzten Krans werden nun die Fachwerk-Fertigteilelemente nacheinander angehoben, jeweils zwischen zwei Stahlbeton-Fertigteilelementen positioniert und auf dem Fachmann bekannte Weise mit diesen verbunden. Alternativ kann jedes Fachwerk-Fertigteilelement auch gleich nach dem Absetzen der Stütze auf der eingelegten Querstrebe durch den Kran angehoben und in dem Zwischenraum unterhalb der Querstrebe positioniert werden.
   Das neue Level ist damit fertiggestellt.
   Der vorangehend beschriebene Ablauf, umfassend die Schritte i) bis v), wird sooft wiederholt, bis die gewünschte Anzahl von Levels errichtet ist und der Turm die gewünschte Endhöhe erreicht hat. Die erfindungsgemäße Konstruktion mit dem aufgesetzten Kran befindet sich somit nun, sicher fixiert, auf der Turmspitze. In speziellen Anwendungsfällen stellt ein solcher Turm bereits das fertige Endprodukt dar, z. B. einen überdurchschnittlich hohen Brückenpfeiler. In diesen Anwendungsfällen werden Konstruktion und Kran in der unten beschriebenen Weise demontiert und zum Erdboden abgelassen, womit das Verfahren beendet ist.
   Bei den o. g., für die Erfindung wesentlichen, Anwendungsfällen, insb. WEA, ist es jedoch erforderlich, eine Baugruppe auf der Turmspitze zu positionieren. Dazu verbleibt die erfindungsgemäße Konstruktion mit dem aufgesetzten Kran, sicher fixiert, auf der Turmspitze. Aufgrund ihrer hinreichend großen lichten Höhe und lichten Weite spannt sie einen ausreichend großen freien Raum auf, um eine Baugruppe, z. B. die Gondel einer WEA oder einen Wasserbehälter, auf der Turmspitze zu positionieren.
   Die auf der Turmspitze zu positionierende Baugruppe wird durch den aufgesetzten Kran bis auf die Höhe der Konstruktion angehoben und in den aufgespannten freien Raum hineingezogen, sodass sie zentral auf der Turmspitze positioniert ist. Sie wird dann auf dem Fachmann bekannte Weise sicher mit dem Turm verbunden. Wie in Ausführungsbeispiel 2 näher erläutert wird, kann die Baugruppe sowohl als Ganzes oder aber nacheinander in Teilen, welche erst auf dem Turm zusammengefügt werden, angehoben werden.
   Abschließend werden der Kran und die Konstruktion, welche die Baugruppe "umrahmt", demontiert. Dabei sind verschiedene Vorgehensweisen möglich:
   Der Kran wird auf dem obersten Level oder auf der Gondel abgestützt und sicher fixiert, sodass die Konstruktion entlastet wird. Er demontiert dann einen Großteil der Konstruktion, insbesondere die oberen, unteren und verbindenden Rahmenabschnitte und lässt diese zum Erdboden ab. Danach wird der Kran selbst über eine kleine Hilfskonstruktion zum Erdboden abgelassen. Die Hilfskonstruktion kann beispielsweise einen kleinen Stahlgalgen umfassen, der an der Oberseite des Turms oder der WEA befestigt wird. Dieser kann nach vollständiger Demontage des Krans in die Gondel der WEA gebracht werden und verbleibt dort. Das Ablassen kann an der Außenseite des Turms oder auch alternativ im Turminneren erfolgen. Einzelne Komponenten können alternativ auch nacheinander mithilfe eines Helikopters abtransportiert werden. Die Konstruktion und der Kran können somit bei der Errichtung weiterer Türme beliebig oft wiederverwendet werden.
b) zur Errichtung eines geschlossenen Betonturms sowie aller Arten von Hybridtürmen
   i) Die nach unten offene Konstruktion wird durch den Mobilkran angehoben, sodass sie zentral über dem Turmstumpf platziert ist, wobei sich die an ihrer Unterseite befindlichen Kragarme auf Höhe der Oberseite des Turmstumpfs befinden. Die Kragarme werden in Richtung der Turmachse ausgefahren, sodass das an der Spitze jedes Kragarms befindliche Befestigungselement mit einem nahe der Oberseite des Turmstumpfs, d. h. nahe der Oberseite seines obersten Levels befindlichen, nach außen weisenden, korrespondierenden Befestigungselement in Kontakt tritt und sicher mit diesem verbunden wird. Der Abstand dieser korrespondierenden Befestigungselemente von der Oberseite des Levels wird so gewählt, dass die oberhalb von ihnen verbleibende Betonschicht hinreichend dick ist, um ein Ausbrechen dieser Befestigungselemente unter Last sicher auszuschließen. Dieser Abstand ist von der Qualität des verwendeten Betons abhängig. In der Regel ist ein Abstand von 50 cm ausreichend. Die Konstruktion wird dadurch, je nach ihrer Ausführung, durch mindestens drei Befestigungselemente mit dem obersten Level des Turmstumpfs verbunden. Sie spannt oberhalb des Turmstumpfs einen ausreichend großen freien Raum auf, um darin ein weiteres Level zu positionieren. Wurde noch kein Turmstumpf errichtet, so wird die Konstruktion direkt auf dem Fundament positioniert und befestigt und spannt oberhalb des Fundaments einen freien Raum zur Positionierung eines ersten Levels auf.
   ii) Um ein solches Level zu errichten, wird zunächst der Kran mithilfe des Mobilkrans bis zur Oberseite der Konstruktion angehoben und auf ihrer Oberseite zentrisch oder exzentrisch aufgesetzt und sicher befestigt.
      Die Hebevorrichtung wird, falls sie mit den oberen Rahmenabschnitten der Konstruktion verbunden ist, in Schritt i) zusammen mit dieser angehoben. Falls sie mit dem Kran verbunden ist, wird sie in Schritt ii) zusammen mit diesem angehoben.
      Wenn die Tragfähigkeit des Mobilkrans ausreicht, können die Schritte i) und ii) kombiniert werden, d. h. die Konstruktion wird zusammen mit dem aufgesetzten Kran und der Hebevorrichtung angehoben und mit dem obersten Level des Turmstumpfs verbunden bzw. auf dem Fundament positioniert und mit diesem verbunden.
   iii) Der Kran hebt nun nacheinander die Stahlbeton-Fertigteilelemente des neuen Levels an und platziert sie in ihrer vorgesehenen Position. Jedes Stahlbeton-Fertigteilelement tritt dabei in direkten Kontakt mit zwei benachbarten Stahlbeton-Fertigteilelementen und wird mit diesen verbunden. Das neue Level des Turms ist damit fertiggestellt und befindet sich im Inneren der Konstruktion. Nahe seiner Oberseite weist es geeignet positionierte, d. h. nach außen gerichtete, korrespondierende Befestigungselemente auf. Die seine Höhe bestimmende Höhe der Stahlbeton-Fertigteilelemente wird so gewählt, dass sich die Oberseite des Levels unterhalb der oberen Rahmenabschnitte der Konstruktion befindet.
   iv) Die Hebevorrichtung, vorzugsweise bestehend aus nach unten gerichteten ausfahrbaren Stützen, bevorzugt hydraulischen Pressen, wird in einem geeigneten Winkel so weit ausgefahren, dass sich die Stützen auf dem oberen Rand des neuen Levels absetzen, wo sie sicher befestigt werden.
   v) Die auf dem oberen Rand des neuen Levels abgestützte Hebevorrichtung trägt nun den Kran und die mit ihm verbundene Konstruktion, wodurch die Kragarme entlastet werden, sodass die Befestigungselemente gelöst und die Kragarme durch Zurückfahren vom Turm getrennt werden können. Nachdem das erfolgt ist, werden der Kran und die mit ihm verbundene Konstruktion durch weiteres Ausfahren der Stützen um eine Levelhöhe angehoben, sodass sich ihre Kragarme in Höhe der Oberseite des neuen (zuletzt errichteten) Levels befinden. Die Kragarme werden, aufgrund der üblichen Verjüngung des Turms, weiter in Richtung der Turmachse ausgefahren, sodass ihre Befestigungselemente in Kontakt mit an der Oberseite des Levels angebrachten korrespondierenden Befestigungselementen treten und mit diesen verbunden werden. Die Konstruktion ist somit wieder stabil fixiert und voll belastbar. Die Konstruktion trägt nun über ihre am Turm befestigten Kragarme ihr Eigengewicht sowie das Gewicht des Krans und der Hebevorrichtung. Sie spannt oberhalb des zuletzt errichteten Levels einen freien Raum zur Positionierung eines weiteren Levels auf.
   vi) Die Stützen der nun entlasteten Hebevorrichtung werden gelöst und nach oben eingefahren, sodass sie den freien Raum nicht einschränken.

Der in den Absätzen iii) bis vi) beschriebene Ablauf wird so oft wiederholt, bis die gewünschte Anzahl von Levels errichtet ist und der Turm somit seine vorgegebene Endhöhe erreicht hat. Bei diesen Levels kann es sich sowohl um Levels aus Stahlbeton-Fertigteilelementen als auch um Levels aus einem Stahlrohr handeln. Somit können sowohl geschlossene Betontürme als auch Hybridtürme mit dem in diesem Abschnitt beschriebenen Verfahren errichtet werden.

Das anschließende Positionieren einer Baugruppe, z. B. einer Gondel einer WEA, auf der Turmspitze in dem durch die lichte Höhe und die lichte Weite der Konstruktion bereitgestellten Raum und die anschließende Demontage von Kran und Konstruktion erfolgen in der gleichen Weise wie oben für den Fall eines offenen Betonturms beschrieben.

### Inhalt der in den Ausführungsbeispielen diskutierten Abbildungen

Fig. 1-4: Schematische Darstellung einer erfindungsgemäßen Konstruktion für offene Betontürme und Veranschaulichung wesentlicher Verfahrensschritte:
   Fig. 1: Anheben der Stahlbeton-Fertigteilelemente eines neuen Levels, um diese im Inneren der auf einem Turmstumpf aufgesetzten Konstruktion zu positionieren.
   Fig. 2: Positionieren aller Stahlbeton-Fertigteilelemente des neuen Levels im Inneren der Konstruktion.
   Fig. 3: Anheben der Konstruktion um mindestens die Höhe des neuen Levels durch Ausfahren der hydraulischen Pressen ihrer Hebevorrichtung.
   Fig. 4: Nacheinander erfolgendes Einfahren der hydraulischen Pressen, Anpassung ihrer horizontalen Positionen entsprechend der Verjüngung des Turms und Absetzen der hydraulischen Pressen auf neu eingebauten Querstreben.
Fig. 5: Schematische Darstellung der erfindungsgemäßen Lösung für geschlossene Betontürme, umfassend eine nach unten offene Konstruktion mit einem aufgesetzten Kran, welcher eine Hebevorrichtung mit (hier ausgefahrenen) hydraulischen Pressen aufweist.
Fig. 6: Schematische Darstellung eines Gondelaufbaus einer WEA unter Verwendung der erfindungsgemäßen Lösung.
Fig. 7: Dreidimensionales Berechnungsmodell einer Konstruktion für geschlossene Betontürme.

### Ausführungsbeispiel 1

### Errichtung eines offenen Betonturms

Die für die Erfindung wesentlichen Schritte für die Errichtung eines offenen Betonturms werden nachfolgend durch Abbildungen erläutert.

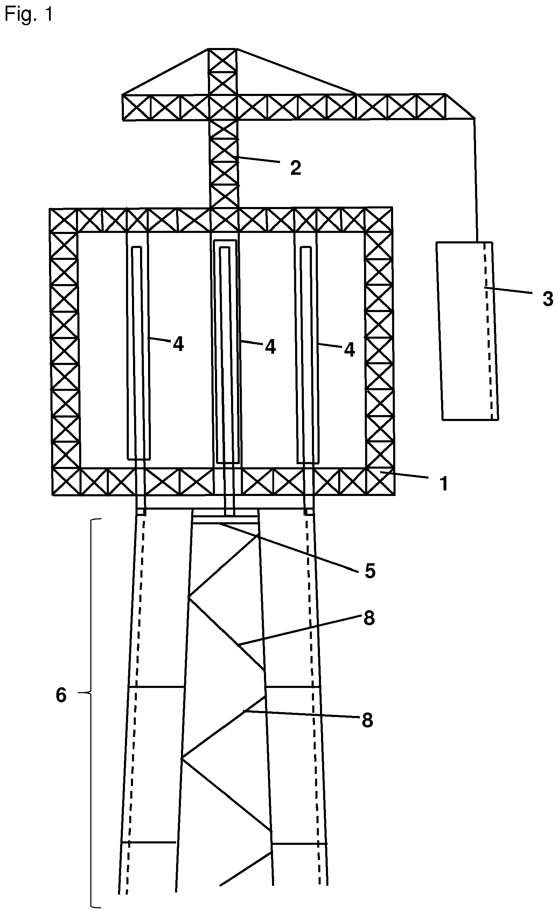

Fig. 1 zeigt in Vorderansicht den oberen Abschnitt eines in herkömmlicher Weise errichteten Turmstumpfs **6.** Er weist mindestens drei Level auf, von denen die beiden obersten vollständig, das darunterliegende nur zu einem Drittel dargestellt ist. Die Level weisen in diesem Beispiel vier Stahlbeton-Fertigteilelemente **3** in Form von Viertelschalen auf. Die Dicke dieser Schalen ist durch eine gestrichelte Linie angedeutet. Benachbarte Stahlbeton-Fertigteilelemente sind durch Fachwerk-Fertigteilelemente **8** miteinander verbunden. In Fig. 1 sind nur die beiden vorderen Stahlbeton-Fertigteilelemente **3** und das sie verbindende Fachwerk-Fertigteilelement **8** erkennbar. Die beiden hinteren Stahlbeton-Fertigteilelemente sind von den vorderen verdeckt. Ebenso verdeckt sind das Fachwerk-Fertigteilelement, das die beiden hinteren Stahlbeton-Fertigteilelemente verbindet, sowie zwei weitere Fachwerk-Fertigteilelemente **8**, die jeweils ein vorderes mit einem hinteren Stahlbeton-Fertigteilelement verbinden.

Auf dem Turmstumpf **6** ist die Konstruktion **1** mit dem aufgesetzten Kran **2** positioniert, indem die als hydraulische Pressen **4** ausgeführten Stützen der mit der Konstruktion **1** verbundenen Hebevorrichtung auf Querstreben **5** abgesetzt sind. Nur eine Querstrebe **5** ist in Fig. 1 erkennbar, die übrigen sind verdeckt. Die hydraulischen Pressen **4** können sich im eingefahrenen Zustand **4e** oder im ausgefahrenen Zustand **4a** befinden.

In Fig. 1 befinden sich alle hydraulischen Pressen im eingefahrenen Zustand **4e.** Dargestellt ist eine Situation zu Beginn des oben beschriebenen Verfahrensschritts a) i), bei dem der auf der Konstruktion **1** fixierte Kran **2** ein erstes für ein neues Level benötigtes Stahlbeton-Fertigteilelement **3** anhebt, um es in dem von der Konstruktion **1** aufgespannten freien Raum auf dem bereits fertigen Turmstumpf **6** zu positionieren.

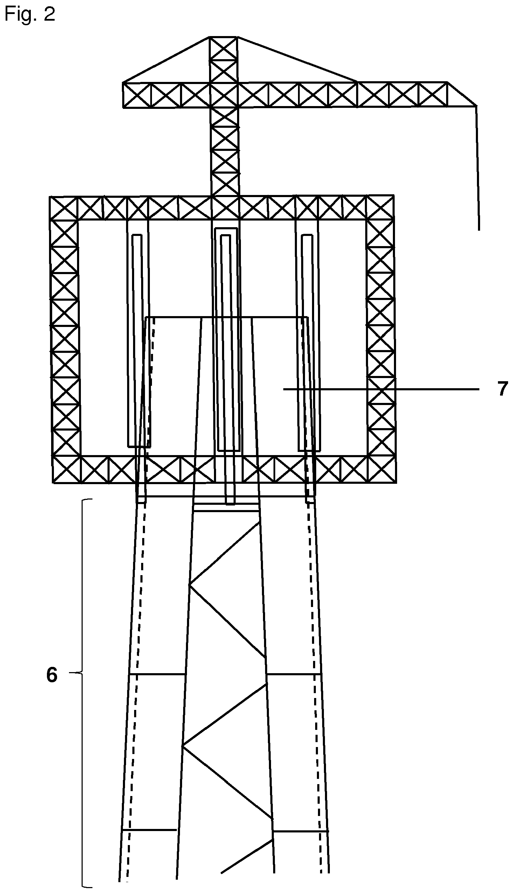

Fig. 2 zeigt die Situation nach Abschluss des Verfahrensschritts a) i): Alle Stahlbeton-Fertigteilelemente, die das neue Level **7** bilden, sind in dem von der Konstruktion aufgespannten freien Raum positioniert und auf dem Turmstumpf aufgesetzt. Der Kran **2** ist entlastet. Die zwischen den Stahlbeton-Fertigteilelementen zu positionierenden Fachwerk-Fertigteilelemente können noch nicht installiert werden, da die Zwischenräume zwischen den Stahlbeton-Fertigteilelementen noch durch die Konstruktion **1** belegt sind.

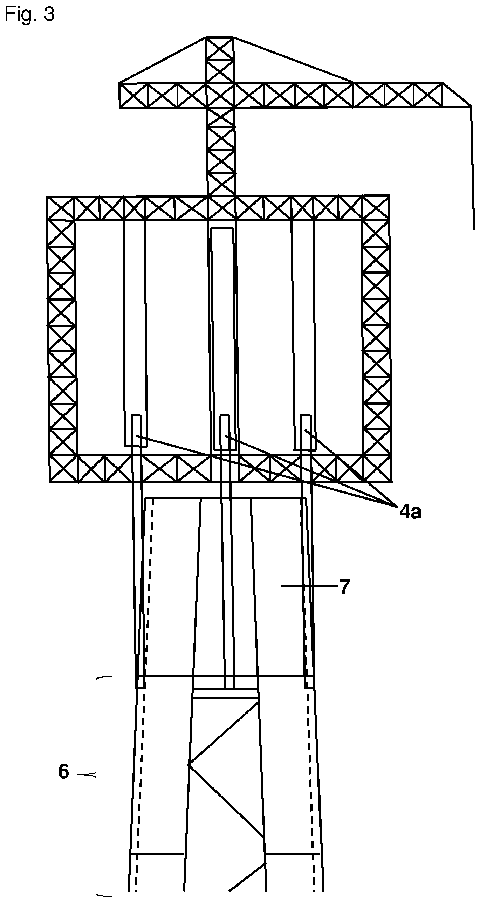

Fig. 3 zeigt die Situation nach Abschluss des Verfahrensschritts a) ii): Die Konstruktion mit dem Kran **2** wurde durch die ausgefahrenen vier hydraulischen Pressen **4a** ihrer Hebevorrichtung soweit angehoben, dass sie sich nun oberhalb des zuletzt aufgebauten Levels **7** befindet. Alle vier auf Querstreben 5 abgesetzten hydraulischen Pressen **4a** tragen die Konstruktion **1** mit dem Kran **2**, wobei, wie oben beschrieben wurde, die Tragkraft von drei hydraulischen Pressen bereits ausreicht, um die Konstruktion mit dem Kran sicher in ihrer Position zu halten.

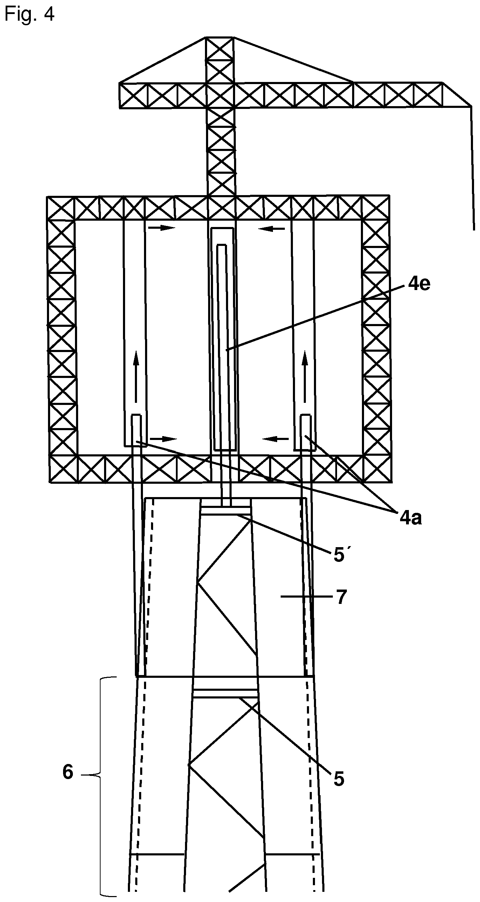

Fig. 4 zeigt die Situation nach Abschluss des Verfahrensschritts a) iii): Eine hydraulische Presse **4e** wurde nach oben eingefahren und auf einer nahe der Oberseite des zuletzt aufgebauten Levels **7** neu eingelegten Querstrebe **5'** abgesetzt. Dabei wurde die hydraulische Presse entsprechend der Verjüngung des Turms horizontal in Richtung der Turmachse verschoben. Ein Fachwerk-Fertigteilelement **8** wurde unterhalb der Querstrebe **5'** eingebaut. Die drei anderen hydraulischen Pressen **4a** befinden sich noch im ausgefahrenen Zustand, zwei von ihnen sind in Fig. 4 sichtbar, die dritte (an der Turmrückseite) ist verdeckt. Das aufeinanderfolgende Einziehen dieser hydraulischen Pressen **4a** ist durch senkrechte Pfeile, ihre horizontale Verschiebung durch waagerechte Pfeile angedeutet. Die Positionierung der weiteren Querstreben und Fachwerk-Fertigteilelemente ist nicht durch Abbildungen dargestellt.

Die Kletterfunktion der Konstruktion mit dem aufgesetzten Kran wird für den Betrachter besonders deutlich, wenn er die Position der Konstruktion **1** gegenüber dem zuletzt errichteten Level **7** in Fig. 2 und Fig. 3 vergleicht.

Das beschriebene Vorgehen wird so oft wiederholt, bis der offene Betonturm die gewünschte Höhe erreicht hat. Das nachfolgende Aufsetzen eines optionalen Stahlrohrturms und einer Baugruppe, z. B. einer Windenergieanlage (WEA), auf die Turmspitze verläuft bei offenen und geschlossenen Betontürmen in der gleichen Weise. Es wird in Ausführungsbeispiel 2 beschrieben.
Es ist offensichtlich, dass die Hydraulikpressen zur Realisierung des beschriebenen Ablaufs um mindestens die Höhe eines Levels ausfahrbar sein müssen. Sie können auch um die Höhe mehrerer Levels ausfahrbar sein. Dann ist es möglich, mehrere neue Levels **7** zu errichten, bevor die Konstruktion erneut angehoben werden muss.

### Ausführungsbeispiel 2

### Aufbau eines geschlossenen Betonturms mit aufgesetztem Stahlrohrturm und Positionierung einer WEA auf der Turmspitze

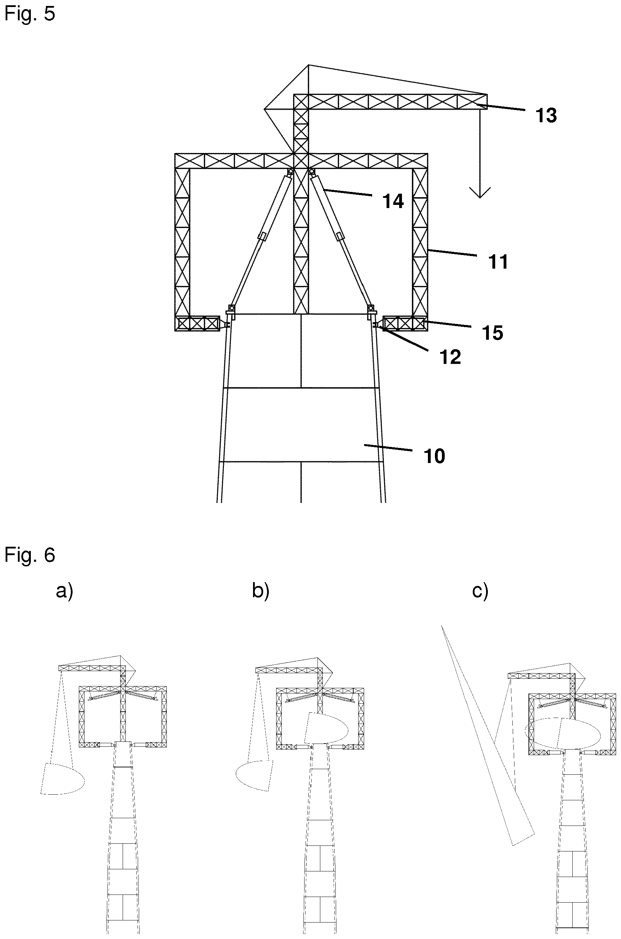

Fig. 5 zeigt einen im Aufbau befindlichen geschlossenen Betonturm mit einer unten offenen Konstruktion **11**, deren untere Rahmenabschnitte, ausgeführt als Kragarme **15**, an den Außenwänden des zu diesem Zeitpunkt obersten Levels befestigt sind. Der aufgesetzte Kran **13** ist mit einer Hebevorrichtung mit vier Stützen, ausgeführt als hydraulische Pressen **14**, ausgestattet. Die beiden sichtbaren hydraulischen Pressen **14** verdecken zwei dahinterliegende hydraulischen Pressen. Es ist die Situation nach Abschluss des oben beschriebenen Schritts b) v) dargestellt: Auf einen bereits fertiggestellten Turmstumpf **6**, von dem die obersten eineinhalb Level gezeigt sind, ist mithilfe des erfindungsgemäßen Verfahrens (Schritte b) i) bis iv)) ein neues Level **7** aufgesetzt worden. Die Level sind aufgebaut aus Stahlbeton-Fertigteilelementen **10**, die bevorzugt als Viertel-, Drittel- oder Halbschalen oder, bei geringem Turmdurchmesser, als Vollkreiselemente, d. h. Vollschalen in Form eines Hohlkegelstumpfs, ausgeführt sind. Die Konstruktion **11** wurde durch Ausfahren der hydraulischen Pressen **14** des mit ihr verbundenen Krans **13** um eine Levelhöhe angehoben. Ihre unteren Rahmenabschnitte, die als Kragarme **15** ausgeführt sind, wurden in Richtung des Turms ausgefahren und ein stabiler belastbarer Anschluss der Konstruktion **11** an die Stahlbeton-Fertigteilelemente des obersten Levels hergestellt. Die so befestigte Konstruktion **11** ist in der Lage, den Kran **13**, auch wenn dieser maximal belastet ist, z. B. mit einem Stahlbeton-Fertigteilelement, zu tragen.

Die Hebevorrichtung des Krans kann nun entlastet werden, indem die hydraulischen Pressen **14** der Hebevorrichtung eingefahren und vorzugsweise in Richtung der Oberseite der Konstruktion eingeklappt werden, um den von der Konstruktion aufgespannten Raum freizugeben. In dem von der Konstruktion aufgespannten freien Raum kann nun ein weiteres Level aus Stahlbeton-Fertigteilelementen oder ein Stahlrohrlevel (eines optionalen Stahlrohrturms) oder eine auf der Turmspitze aufzusetzende Baugruppe, z. B. die Gondel einer WEA, positioniert werden. Es sei darauf hingewiesen, dass der mittlere verbindende Rahmenabschnitt in Fig. 5 hinter der Zeichenebene und somit, wie die beiden anderen verbindenden Rahmenabschnitte, außerhalb des Turms verläuft.

Fig. 6 zeigt die Positionierung der Baugruppe am Beispiel der Gondel einer WEA. Die Gondel weist in diesem Beispiel zwei Teile auf. Mithilfe des Krans wird zunächst, wie Fig. 6a zeigt, der hintere Teil der Gondel, der direkt auf der Turmspitze zu befestigen ist, angehoben. Nachdem das erfolgt ist, wird, wie Fig. 6b zeigt, der vordere Teil der Gondel, der mit dem hinteren Teil der Gondel zu verbinden ist, angehoben. Nachdem diese Verbindung hergestellt ist, werden, wie Fig. 6c zeigt, nacheinander die Rotorblätter der WEA angehoben und mit der Gondel verbunden.

Anschließend erfolgt der Abbau der Konstruktion und des Krans (nicht dargestellt).

### Ausführungsbeispiel 3

### Berechnungsmodell einer erfindungsgemäßen Konstruktion

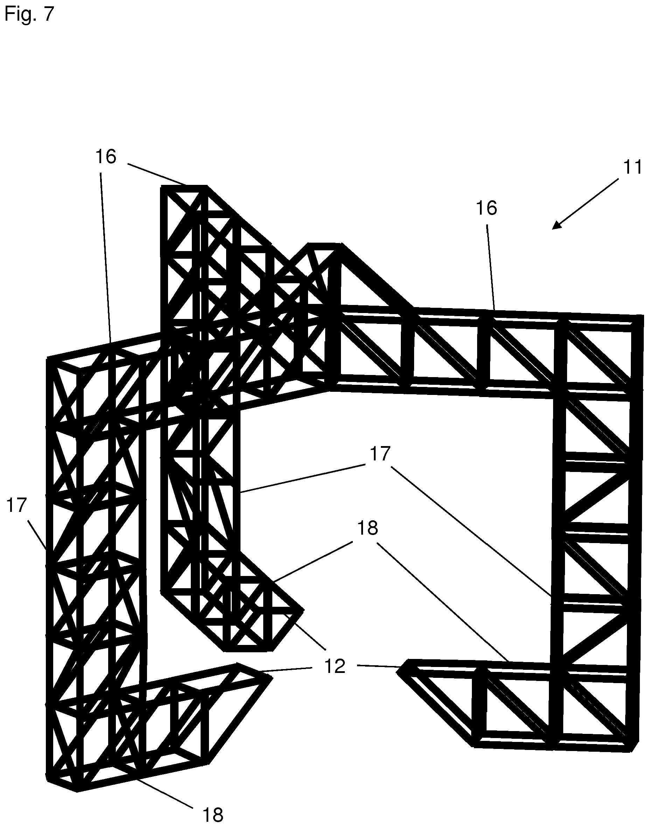

Die erfindungsgemäßen Konstruktionen **1** und **11** sind in Fig. 1 bis 6 nur schematisch dargestellt. Fig. 7 zeigt daher ein dreidimensionales Berechnungsmodell einer nach unten offenen Konstruktion **11**, die zum Aufbau eines geschlossenen Betonturms sowie aller Formen eines Hybridturms unmittelbar verwendbar ist. Sie ist auf den Turmstumpf eines solchen Betonturms aufsetzbar und mit dem anwachsenden Turm anhebbar, wobei sie sich an den Außendurchmesser des sich in der Regel verjüngenden Turms anpasst. Der Turm ist in Fig. 7 nicht dargestellt. Die Konstruktion weist einen aufgesetzten Kran auf, der in Fig. 7 ebenfalls nicht dargestellt ist.

Die Konstruktion **11** ist dreistrahlig ausgeführt: Von einem gemeinsamen Anfangspunkt gehen drei waagerechte obere Rahmenabschnitte **16** aus. Sie sind symmetrisch angeordnet, d. h. ihre Richtungen sind um 120° versetzt. An ihren äußeren Enden sind diese oberen Rahmenabschnitte mit hier senkrecht verlaufenden verbindenden Rahmenabschnitten **17** verbunden, die wiederum an ihren unteren Enden mit waagerechten unteren Rahmenabschnitten **18** verbunden sind. Die gesamte Konstruktion ist somit symmetrisch ausgeführt und weist im Zentrum eine senkrecht verlaufende Symmetrieachse (nicht eingezeichnet) auf. Die Symmetrieachse ist eine dreizählige Drehachse. Die unteren Rahmenabschnitte **18** sind als hydraulische Kragarme ausgeführt, die in Richtung der Symmetrieachse ausfahrbar sind. Sie weisen Anschlüsse **12** an den nicht dargestellten Turm auf.

Alle Rahmenabschnitte sind als Stahlfachwerk ausgeführt. Die Länge der waagerechten oberen Rahmenabschnitte und der senkrechten verlaufenden verbindenden Rahmenabschnitte wird so gewählt, dass der von der Konstruktion aufgespannte freie Raum ausreichend groß ist, um sowohl ein neues Level als auch die an der Turmspitze zu positionierende Baugruppe in diesem Raum unterbringen zu können. Teile der Baugruppe, z. B. die Rotorblätter einer WEA, können dabei über diesen Raum hinausreichen. Die Bewegung der Rotorblätter kann während der Errichtung der WEA durch die Konstruktion behindert sein. Nach dem abschließenden Abbau der Konstruktion erlangen die Rotorblätter ihre volle Beweglichkeit.

Die Erfindung ist nicht auf die in der Beschreibung und den Ausführungsbeispielen angegebenen Formen beschränkt, sondern kann in vielfacher Weise vorteilhaft erweitert werden. So können (nicht dargestellt in den Abbildungen) nachlaufende Gerüstebenen für die Arbeiter im Inneren des Turms und/oder außen am Turm installiert werden, die ebenfalls mit dem anwachsenden Turm angehoben werden. Der auf der Konstruktion aufgesetzte Kran muss nicht zentral, also im Berührungspunkt der oberen Rahmenabschnitte installiert sein, sondern kann auch außermittig, d. h. an einer beliebigen Stelle eines oberen Rahmenabschnitts aufgesetzt sein. Vorteilhaft ist, wie bereits erwähnt, die Verwendung eines zweiten, an einer beliebigen Stelle der unteren Rahmenabschnitte aufgesetzten Krans. Dieser Kran übernimmt Aufgaben des ersten, oben aufgesetzten, Krans, z. B. den Einbau der Fachwerk-Fertigteilelemente bei offenen Betontürmen oder die Bewegung nachlaufender Gerüstebenen zur Nachbearbeitung der Horizontalfugen zwischen den Stahlbeton-Fertigteilelementen, wodurch der Aufbau des Turms beschleunigt werden kann.

Die im vorangehenden Absatz genannten sowie auch alle anderen für den Fachmann naheliegenden Erweiterungen und Modifizierungen der Erfindung fallen unter den Schutzbereich dieser Patentanmeldung.

Abschließend seien die Vorteile der Erfindung gegenüber dem Stand der Technik noch einmal genannt:
Es können Türme in beliebiger Höhe erstellt werden.
Die Abhängigkeit von externen Kränen ist aufgehoben.
Es genügt ein einziger Kran (im Gegensatz zur EP2851328A1, wo Kran und Hilfskran erforderlich sind).
Bei der Errichtung von WEA in Waldgebieten sind keine großflächigen Rodungsmaßnahmen zum Aufbau von Raupenkränen mehr erforderlich.
Es sind keine Schwerlasttransporte zum Aufstellort mehr erforderlich. Die Bestandteile der erfindungsgemäßen Konstruktion können mit einfachen LKWs transportiert werden.
Die Erfindung erlaubt eine Montage bei höheren Windgeschwindigkeiten, da der aufgesetzte Kran weniger windempfindlich als herkömmliche externe Kräne ist. Dadurch gibt es weniger Stillstandszeiten auf der Baustelle, was die Kosten für den Bau der Türme erheblich senkt. Insbesondere bei der Errichtung von offenen Betontürmen können die Stahlbeton-Fertigteilelemente oberer Levels auch im Turminneren hochgezogen werden, was zu einer noch geringeren Windempfindlichkeit führt.

Durch nachlaufende Gerüstebenen auf der Außenseite des Turms können die Horizontalfugen zwischen den einzelnen Leveln nachbearbeitet werden, was bei den bisher bekannten Turmaufbauten nicht möglich ist.
Diese Vorteile bedingen eine höhere Produktivität bei der Errichtung hoher Türme. Zudem wird, z. B. durch fehlerfreie Fugen, die Qualität der Türme verbessert und damit ihre Nutzungsdauer gesteigert. Es können Türme mit aufgesetzter Baugruppe (z. B. WEA, Wassertürme), aber auch Türme ohne aufgesetzte Baugruppe, z. B. Brückenpfeiler, errichtet werden. Die Erfindung ist also zur Errichtung von Türmen jeglicher bekannter Funktionalitäten geeignet.

### Bezugszeichenliste

- 1: - Konstruktion für offene Betontürme, ausgestattet mit einer Hebevorrichtung
- 2: - Kran, aufgesetzt auf die Konstruktion 1
- 3: - Stahlbeton-Fertigteilelement für offene Betontürme
- 4: - Stütze der Hebevorrichtung, ausgeführt als hydraulische Presse
4a - Stütze im ausgefahrenen Zustand
4e - Stütze im eingefahrenen Zustand
- 5, 5': - Querstrebe zum Absetzen einer Stütze
- 6: - Turmstumpf
- 7: - zuletzt aufgesetztes Level aus mehreren Stahlbeton-Fertigteilelementen
- 8: - Fachwerk-Fertigteilelement
- 10: - Stahlbeton-Fertigteilelemente für geschlossene Betontürme, ausgeführt als Viertel-, Drittel- oder Halbschalen oder als Hohlkegelstumpf
- 11: - Konstruktion für den Aufbau von geschlossenen Betontürmen, Hybridtürmen oder Pfeilern aus Stahlbeton-Fertigteilelementen.
- 12: - Anschluss der Konstruktion 11 an die Stahlbeton-Fertigteilelemente des zu errichtenden Turms
- 13: - Kran, der auf der Konstruktion 11 aufgesetzt ist und eine Hebevorrichtung aufweist
- 14: - Stützen der Hebevorrichtung des Krans 13, ausgeführt als hydraulische Pressen
- 15: - horizontal verschiebbarer Kragarm zum Anschluss an die Betonkonstruktion
- 16: - oberer Rahmenabschnitt
- 17: - verbindender Rahmenabschnitt
- 18: - unterer Rahmenabschnitt

## Patentansprüche

1. Vorrichtung zur Errichtung eines Turms aus mehreren, übereinander angeordneten, Levels, wobei an der Turmspitze eine Baugruppe aufsetzbar ist, die folgende Komponenten aufweist:
a) eine an der Turmspitze des im Aufbau befindlichen Turms positionierbare Konstruktion (11) aus Rahmen mit mehreren Rahmenabschnitten, die eine lichte Höhe und eine lichte Weite aufweist, die so groß gewählt sind, dass der von der Konstruktion aufgespannte freie Raum ausreicht, um nacheinander darin unterzubringen:
i) jedes oberhalb eines in herkömmlicher Weise errichteten Turmstumpfs (6) zu positionierende Level (7),
ii) eine an der Turmspitze zu positionierende Baugruppe,
b) einen Kran (13), der auf der Oberseite der Konstruktion (11) aufgesetzt ist,
c) eine Hebevorrichtung mit mindestens drei Stützen (14), die mit der Konstruktion (11) oder mit dem Kran (13) verbunden ist und eine Tragfähigkeit aufweist, die es erlaubt, die Konstruktion (11) und den Kran (13) gemeinsam anzuheben, wobei der dabei überwindbare Höhenunterschied mindestens der Höhe des höchsten aufzusetzenden Levels oder der Höhe der aufzusetzenden Baugruppe, falls diese höher ist als das höchste aufzusetzende Level, entspricht,
wobei die Konstruktion (11) aus mindestens drei Rahmen besteht, jeweils aufweisend einen außerhalb des Turmvolumens liegenden verbindenden Rahmenabschnitt (17), welcher einen oberen Rahmenabschnitt (16) und einen unteren Rahmenabschnitt (18) verbindet, wobei die oberen Rahmenabschnitte (16) der mindestens drei Rahmen in einem Bereich der Turmachse miteinander verbunden sind,
**dadurch gekennzeichnet, dass** die unteren, um die Höhe der verbindenden Rahmenabschnitte (17) niedriger liegenden, Rahmenabschnitte (18) als in Richtung der Turmachse ausziehbare Kragarme (15) ausgeführt sind, deren ausziehbare Länge so gewählt ist, dass, unabhängig vom Durchmesser eines Levels, stets Anschlüsse (12) an das Level herstellbar sind, wobei die Hebevorrichtung mit der Konstruktion (11) oder dem aufgesetzten Kran (13) verbunden ist.

2. Vorrichtung nach Anspruch 1, **dadurch gekennzeichnet, dass** die Anschlüsse (12) als Befestigungselemente ausgebildet sind, welche mit am Level installierten korrespondierenden Befestigungselementen verbindbar sind.

3. Vorrichtung nach einem der Ansprüche 1 bis 2, **dadurch gekennzeichnet, dass** die Konstruktion (11) aus Stahl oder aus Glasfaser- und Kohlefaser-Verbundwerkstoffen oder aus Aluminium oder aus Stahl- und Spannbeton oder aus Kombinationen dieser Materialien ausgeführt ist.

4. Vorrichtung nach einem der Ansprüche 1 bis 3, **dadurch gekennzeichnet, dass** die Stützen der Hebevorrichtung als Hydraulikpressen (14) ausgeführt sind.

5. Vorrichtung nach einem der Ansprüche 1 bis 4, **dadurch gekennzeichnet, dass** die Rahmenabschnitte der Konstruktion (11) als Fachwerkkonstruktion oder als Walzprofile oder als geschweißte Träger ausgeführt sind.

6. Verfahren zur Errichtung eines geschlossenen Betonturms oder eines Hybridturms aus mehreren, übereinander angeordneten, Levels, das wie folgt durchgeführt wird:
a) eine Vorrichtung nach Anspruch 1, 2, 3, 4 oder 5 wird angehoben und über einem Turmstumpf (6) positioniert, sodass sich die unteren Rahmenabschnitte (18) der Konstruktion (11), ausgeführt als Kragarme (15), auf Höhe der Oberseite des obersten Levels befinden; wurde noch kein Turmstumpf errichtet, so wird die Vorrichtung auf dem Fundament abgesetzt,
b) die Kragarme (15) werden in Richtung der Turmachse ausgefahren, sodass Anschlüsse (12) unterhalb der Oberseite des obersten Levels hergestellt werden, sodass die Vorrichtung sicher nahe der Oberseite des obersten Levels des Turmstumpfs (6) fixiert ist und oberhalb desselben einen Raum zur Positionierung eines weiteren Levels aufspannt; wurde noch kein Turmstumpf errichtet, so werden die unteren Rahmenabschnitte mit dem Fundament verbunden, sodass die Vorrichtung den Raum zur Positionierung eines Levels unmittelbar über dem Fundament aufspannt,
c) mithilfe des Krans (13) der Vorrichtung werden nacheinander die Stahlbeton-Fertigteilelemente des nächsten, neu aufzubauenden Levels angehoben, in dem aufgespannten freien Raum positioniert und miteinander sowie mit dem darunterliegenden Level verbunden,
d) die Stützen (14) der Hebevorrichtung werden soweit ausgefahren, dass sie auf der Oberseite des neu aufgebauten Levels abgesetzt werden und somit das Gewicht der Vorrichtung tragen, wodurch die Kragarme (15) entlastet werden,
e) die Anschlüsse (12) werden gelöst und die Kragarme (15) zurückgefahren, bis sie vom Turmstumpf (6) getrennt sind; waren die unteren Rahmenabschnitte, statt an einen Turmstumpf angeschlossen, mit dem Fundament verbunden, so werden die Verbindungen mit dem Fundament gelöst.
f) die Stützen (14) werden weiter ausgefahren, sodass die Vorrichtung soweit angehoben wird, dass sich ihre unteren Rahmenabschnitte auf Höhe der Oberseite des obersten Levels befinden,
g) die Kragarme (15) werden in Richtung der Turmachse ausgefahren, sodass Anschlüsse (12) nahe der Oberseite des obersten Levels hergestellt werden, sodass die Vorrichtung sicher nahe der Oberseite des obersten Levels des Turmstumpfs (6) fixiert ist und oberhalb desselben einen freien Raum zur Positionierung eines weiteren Levels aufspannt,
h) die Stützen (14) der Hebevorrichtung werden nach oben eingefahren,
i) die Schritte c) bis h) werden sooft wiederholt, bis die erforderliche Anzahl von Levels errichtet ist und der Turm die gewünschte Höhe erreicht hat,
j) sofern eine an der Turmspitze zu positionierende Baugruppe vorgesehen ist, wird diese als Ganzes oder nacheinander in Teilen angehoben, in dem von der Konstruktion (11) aufgespannten freien Raum positioniert und montiert, wobei einzelne Teile, im Falle einer Windenergieanlage die Rotorblätter, über diesen Raum hinausreichen können.

7. Verwendung einer Vorrichtung nach einem der Ansprüche 1 bis 5 und eines Verfahrens nach Anspruch 6 zum Aufbau folgender Turmarten:
- geschlossene Betontürme,
- Hybridtürme, aufweisend einen geschlossenen Betonturm mit einem aufgesetzten Stahlrohrturm.

8. Verwendung nach Anspruch 7, **dadurch gekennzeichnet, dass** auf die Türme eine Baugruppe aufgesetzt ist.

9. Verwendung nach Anspruch 8, **dadurch gekennzeichnet, dass** die Baugruppe umfasst:
- eine Windenergieanlage mit Gondel und Rotorblättern,
- einen Wasserbehälter oder
- eine Aussichtsplattform.

10. Verwendung nach Anspruch 8 oder 9, **dadurch gekennzeichnet, dass** die Baugruppe als Ganzes angehoben und auf den Turm aufgesetzt wird oder dass die Baugruppe in Komponenten zerlegt ist, die einzeln angehoben und auf dem Turm zusammengesetzt und aufgesetzt werden.

## Claims

1. Apparatus for erection of a tower of several levels, arranged one above the other, whereby an assembly is attachable at the top of the tower, comprising the following components:
a) a structure (11) being placeable at the top of the tower under erection and made of frames with several frame sections, which has a clear height and a clear width which are selected as large that the free space spanned by the construction is sufficient to accommodate successively therein:
i) any level (7) to be positioned above a tower stump (6) built in a conventional manner,
ii) an assembly to be positioned at the top of the tower,
b) a crane (13) mounted on the upper side of the structure (11),
c) a lifting device with at least three supports (14) which is connected with the structure (11) or with the crane (13) and has a load-bearing capacity which allows the structure (11) and the crane (13) to be lifted together, whereby the height difference to be overcome is at least equal to the height of the highest level to be mounted or to the height of the assembly to be mounted if it is higher than the highest level to be mounted,
whereby the structure (11) consists of at least three frames, each comprising a connecting frame section (17) lying outside the tower volume, which connects an upper frame section (16) and a lower frame section (18), whereby the upper frame sections (16) of the at least three frames are connected to each other in a region of the tower axis,
**characterised in that** the lower frame sections (18), which are lower by the height of the connecting frame sections (17), are designed as cantilevers (15) being extendable into the direction of the tower axis, the extendable length of which is selected such that, irrespective of the diameter of a level, connections (12) to the level are always realisable, whereby the lifting device is connected to the construction (11) or to the crane (13) mounted thereon.

2. Apparatus according to claim 1, **characterized in that** the connections (12) are designed as fastening elements which are connectable to corresponding fastening elements installed on the level.

3. Apparatus according to one of claims 1 to 2, **characterised in that** the structure (11) is made of steel or of glass fibre and carbon fibre composites or of aluminium or of reinforced and prestressed concrete or of combinations of these materials.

4. Apparatus according to one of claims 1 to 3, **characterised in that** the supports of the lifting device are designed as hydraulic presses.

5. Apparatus according to one of claims 1 to 4, **characterised in that** the frame sections of the structure (11) are designed as a framework construction or as rolled profiles or as welded girders.

6. Procedure for erection of a closed concrete tower or a hybrid tower consisting of several levels arranged one above the other, which is performed as follows:
a) an apparatus according to claim 1, 2, 3, 4 or 5 is lifted and positioned above a tower stump (6) so that the lower frame sections (18) of the structure (11) which are designed as cantilevers (15) are located at the height of the topside of the uppermost level; if no tower stump has been erected yet the apparatus is set down on the foundation,
b) the cantilevers (15) are extended in the direction of the tower axis so that connections (12) are established below the topside of the uppermost level so that the apparatus is securely fixed near the topside of the uppermost level of the tower stump (6) and is spanning above the tower stump a space for positioning another level; if no tower stump has been erected yet, the lower frame sections are connected to the foundation so that the apparatus is spanning the space for positioning a level directly above the foundation,
c) by means of the crane (13) of the apparatus, the precast reinforced concrete elements of the next level to be rebuilt are lifted one after the other, positioned in the spanned free space and connected to each other and to the level below,
d) the supports (14) of the lifting device are extended to such an extent that they are set down on the topside of the newly erected level and thus carry the weight of the apparatus, whereby the cantilevers (15) are relieved,
e) the connections (12) are released and the cantilevers (15) are retracted until they are separated from the tower stump (6); if the lower frame sections, instead of being connected to a tower stump, were connected to the foundation, the connections to the foundation are released,
f) the supports (14) are extended further so that the apparatus is lifted as far that its lower frame sections are positioned at the height of the topside of the uppermost level,
g) the cantilevers (15) are extended in the direction of the tower axis so that connections (12) are made near the topside of the uppermost level, so that the apparatus is securely fixed near the topside of the uppermost level of the tower stump (6) and spans above the tower stump a free space for positioning a further level,
h) the supports (14) of the lifting device are retracted upwards,
i) steps c) to h) are repeated until the required number of levels is erected and the tower has reached the desired height,
j) if an assembly is to be positioned at the top of the tower, it is lifted as a whole or successively in parts, positioned in the free space spanned by the structure (11) and mounted, whereby separate parts, in case of a wind turbine the rotor blades, can extend beyond this space.

7. Use of an apparatus according to one of claims 1 to 5 and a procedure according to claim 6 for the construction of the following tower types:
- closed concrete towers,
- hybrid towers, comprising a closed concrete tower with a tubular steel tower mounted above.

8. Use according to claim 7, **characterized in that** an assembly is mounted on top of the towers.

9. Use according to claim 8, **characterised in that** the assembly comprises
- a wind turbine with nacelle and rotor blades,
- a water tank or
- a viewing platform.

10. Use according to claim 8 or 9, **characterized in that** the assembly as a whole is lifted and placed on the tower or that the assembly is disassembled into components which are individually lifted and assembled and placed on the tower.

## Revendications

1. Dispositif pour l'érection d'une tour composée de plusieurs niveaux disposés les uns au-dessus des autres, par lequel un assemblage est plaçable au sommet de la tour, qui comporte les composants suivants :
a) une structure (11), qui est plaçable au sommet de la tour en construction, constituée de cadres à plusieurs parties de cadre, qui a une hauteur intérieure et une largeur intérieure, qui sont choisis si grands que l'espace libre formé par la construction est suffisant pour positionner dedans successivement :
i) chaque niveau (7) devant être placé au-dessus d'une souche de tour (6) construite de manière conventionnelle,
ii) un assemblage à placer au sommet de la tour,
b) une grue (13), qui est placée au sommet de la structure (11),
c) un dispositif de levage avec au moins trois supports (14), relié à la structure (11) ou à la grue (13) et ayant une capacité de levage, une capacité de levage, qui permet à lever la structure (11) et la grue (13) simultanément, où la différence de hauteur surmontable étant au moins égale à la hauteur du niveau de hauteur maximale à placer ou à la hauteur de l'assemblage à placer, si celle-ci est supérieure au niveau de hauteur maximale,
dans lequel la construction (11) se compose d'au moins trois cadres, chacun comprenant une partie de cadre de connexion (17) située à l'extérieur du volume de la tour, qui relie une partie de cadre supérieure (16) et une partie de cadre inférieure (18), dans lequel les parties de cadre supérieures (16) des au moins trois cadres sont reliées entre elles dans une région de l'axe de la tour,
**caractérisé en ce que** les parties de cadre inférieure (18), qui sont inférieures de la hauteur des parties des cadres de connexion (17), sont conçus comme des cantilevers (15) extensibles dans la direction de l'axe de la tour, dont la longueur extensible est choisie de manière à ce que, quel que soit le diamètre d'un niveau, des raccords (12) avec le niveau sont toujours réalisables, dans lequel le dispositif de levage étant relié à la structure (11) ou à la grue (13) montée.

2. Dispositif selon la revendication 1, **caractérisé en ce que** les raccords (12) sont conçus comme des éléments de fixation qui sont connectables à des éléments de fixation correspondants installés sur le niveau.

3. Dispositif selon l'une quelconque des revendications 1 à 2, **caractérisé en ce que** la structure (11) est en acier ou en matériaux composites à base de fibres de verre et de fibres de carbone ou en aluminium ou en béton armé et précontraint ou en combinaisons de ces matériaux.

4. Dispositif selon l'une quelconque des revendications 1 à 3, **caractérisé en ce que** les supports du dispositif de levage sont conçus comme des presses hydrauliques (14).

5. Dispositif selon l'une des revendications 1 à 4, **caractérisé en ce que** les parties de cadre de la structure (11) sont conçus comme une construction en treillis ou comme des profilés laminés ou comme des poutres soudées.

6. Procédé d'érection d'une tour fermée en béton ou d'une tour hybride constituée de plusieurs niveaux disposés les uns au-dessus des autres, qui s'effectue comme suit :
a) Un dispositif selon les revendications 1, 2, 3, 4 ou 5 est soulevé et positionné au-dessus d'une souche de tour (6) de sorte que les sections de cadre inférieures (18) de la structure (11), conçues comme des cantilevers (15), se trouvent au niveau du côté supérieur du niveau le plus élevé ; si une souche de tour n'a pas encore été érigée, le dispositif est placé sur la fondation,
b) Les cantilevers (15) sont étendus dans la direction de l'axe de la tour de manière à ce que les raccords (12) se font en dessous du côté supérieur du niveau supérieur, de sorte que le dispositif est solidement fixé près du niveau du côté supérieur du niveau le plus élevé de la souche de la tour (6), de sorte que le dispositif couvre un espace au-dessus de ladite souche pour le positionnement d'un autre niveau ; si une souche de tour n'a pas encore été érigée, les parties de cadre inférieures sont reliées à la fondation de sorte que le dispositif crée un espace permettant de positionner un niveau directement au-dessus de la fondation,
c) À l'aide de la grue (13) du dispositif, les éléments préfabriqués en béton armé du niveau suivant à construire sont soulevés l'un après l'autre, positionnés dans l'espace libre qui a été créé et reliés entre eux et au niveau inférieur,
d) Les supports (14) du dispositif de levage sont étendus jusqu'à ce qu'ils soient posés sur le côté supérieur du niveau nouvellement construit et supportent ainsi le poids du dispositif, soulageant ainsi les cantilevers (15),
e) Les raccords (12) sont déconnectés et les cantilevers (15) sont rétractés jusqu'à ce qu'ils soient séparés de la souche de la tour (6) ; si les parties de cadre inférieures ont été raccordées à la fondation au lieu d'être raccordées à une souche de la tour, les raccords à la fondation sont déconnectés,
f) Les supports (14) sont étendus en plus de manière à ce que le dispositif soit soulevé de sorte que ses parties de cadre inférieures se trouvent au niveau du côté supérieur du niveau le plus élevé,
g) Les cantilevers (15) sont étendus dans la direction de l'axe de la tour de manière à ce que de raccords (12) soient effectués près du côté supérieur du niveau supérieur, de sorte que le dispositif soit solidement fixé près du côté supérieur du niveau supérieur de la souche de la tour (6) et couvre un espace libre au-dessus de celle-ci pour le positionnement d'un niveau suivant,
h) Les supports (14) du dispositif de levage sont rétractés vers le haut,
i) Les étapes c) à h) sont répétées jusqu'à ce que le nombre de niveaux requis soit construit et que la tour ait atteint la hauteur souhaitée,
j) Si un assemblage à positionner au sommet de la tour est prévu, il est levé dans son ensemble ou successivement par parties, positionné et assemblé dans l'espace libre défini par la structure (11), où certains composants individuels, dans le cas d'une éolienne les pales du rotor, pouvant s'étendre au-delà de cet espace.

7. Utilisation d'un dispositif selon l'une des revendications 1 à 5 et d'un procédé selon la revendication 6 pour la construction des types de tours suivants :
- Tours fermées en béton,
- Tours hybrides comprenant une tour fermée en béton avec une tour tubulaire en acier placée au sommet.

8. Utilisation selon la revendication 7, **caractérisée en ce qu'**un assemblage est placé sur les tours.

9. Utilisation selon la revendication 8, **caractérisée en ce que** l'assemblage comprend:
- Une installation éolienne avec nacelle et pales de rotor,
- Un conteneur d'eau ou
- Une plateforme panoramique.

10. Utilisation selon la revendication 8 ou 9, **caractérisée en ce que** l'assemblage est soulevé et placé sur la tour ou que l'assemblage est désassemblé en composants qui sont individuellement soulevés et assemblés et placés sur la tour.
